(19) Europäisches Patentamt
European Patent Office
Office européen des brevets

(11) **EP 2 626 615 A1**

## (12) EUROPEAN PATENT APPLICATION
published in accordance with Art. 153(4) EPC

(43) Date of publication:
**14.08.2013 Bulletin 2013/33**

(21) Application number: **11830466.6**

(22) Date of filing: **07.09.2011**

(51) Int Cl.:
*F17C 7/00* [(2006.01)]     *F17C 13/00* [(2006.01)]

(86) International application number:
**PCT/JP2011/070336**

(87) International publication number:
**WO 2012/046533 (12.04.2012 Gazette 2012/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 18.02.2011  JP 2011033005
18.02.2011  JP 2011033001
18.02.2011  JP 2011032998
18.02.2011  JP 2011032991
21.12.2010  JP 2010284311
12.10.2010  JP 2010229364
08.10.2010  JP 2010228300
08.10.2010  JP 2010228275

(71) Applicant: **Central Glass Company, Limited
Yamaguchi 755-0001 (JP)**

(72) Inventors:
• **YAO, Akifumi**
  **Yamaguchi 755-0001 (JP)**
• **UMEZAKI, Tomonori**
  **Yamaguchi 755-0001 (JP)**
• **NAKAHARA, Keita**
  **Yamaguchi 755-0001 (JP)**
• **TAKEDA, Yuta**
  **Yamaguchi 755-0001 (JP)**

(74) Representative: **Moore, Graeme Patrick et al
Mewburn Ellis LLP
33 Gutter Lane
London
EC2V 8AS (GB)**

## (54) HALOGEN-CONTAINING GAS SUPPLY APPARATUS AND HALOGEN-CONTAINING GAS SUPPLY METHOD

(57)     Disclosed is a halogen-containing gas supply apparatus for supplying a halogen-containing gas from a container filled with the halogen-containing gas at a high pressure to an external apparatus, the halogen-containing gas supply apparatus including: a supply tube connecting the container and the external apparatus; a supply valve attached to the supply tube to supply the halogen-containing gas from the container; and a shock wave prevention mechanism installed downstream of the supply valve to prevent generation of a shock wave.

*FIG. 1*

**Description**

BACKGROUND OF THE INVENTION

This invention relates to a halogen-containing gas supply apparatus and a halogen-containing gas supply method.

The halogen gas plays important roles as a board etching process gas in manufacturing semiconductor devices, MEMS devices, TFT panels for liquid crystal, and semiconductors for solar cells or a cleaning process gas for thin-film deposition apparatuses such as CVD apparatuses.

To supply halogen gas, there exists a method of supplying halogen gas from a cylinder filled with halogen gas at high pressure. The high-pressure halogen gas in the cylinder is supplied to a semiconductor manufacturing apparatus through a valve for introducing the gas.

Increasing the filling pressure for halogen gas to reduce the frequency of replacement of cylinders leads to reduction in workload or transport cost for the cylinders. In addition, highly concentrated halogen gas leads to efficient cleaning process. For these reasons, desired is filling a cylinder with halogen gas at high pressure and high concentration.

The halogen gas is highly reactive; it is not easy to handle this gas for a semiconductor manufacturing apparatus. It is desired to develop a container valve suitable for fluorine gas, which is especially highly reactive.

JP 2005-207480 A discloses a container valve that supplies highly concentrated fluorine gas at high pressure to a semiconductor manufacturing system.

JP 2005-188672 A discloses a direct diaphragm valve used as a container valve to supply semiconductor material gas or purge gas used in the semiconductor industry, standard gas, or high-purity gas such as carrier gas. This valve is configured to minimize the dead space allowing the gas to stay by removing obstacles from the gas passage so as to improve gas exchange performance such as vacuum evacuation performance and purge performance.

JP 2000-291500 A discloses a valve having a rubber sealing in a part recessed from a flame passage to cope with burn of the rubber sealing and degradation in sealing function in the sealing part of the valve.

JP Utility Model H05-62704 A discloses a linear servo valve which is devised to air-cool a coil and a bobbin for opening and closing the valve seat to prevent burn of the coil and insulation deterioration.

SUMMARY OF THE INVENTION

The container valve disclosed in JP 2005-207480 A is, however, a valve that opens and closes the gas passage with a sheet disc to seal the air from the outside with a diaphragm; accordingly, a dead space allowing the gas to stay in the valve chest is large.

JP 2005-188672 A discloses that polishing the interior of the valve to prevent gas molecules such as moisture and particles from sticking to the gas contact surface. However, it does not specifically describe the part or the shape to be polished or grinded in detail. It does not mention the applicability to fluorine gas or fluoride gas, either.

When a traditional valve handles high pressure and high concentrated fluorine gas, the temperature in the valve chest goes up to cause problems such as surface corrosion inside the valve chest and deterioration of a seal in the chest. Furthermore, if the seal is made of a resin material, there exists a problem that the resin material is burnt by the fluorine gas. This problem applies to the case handling supporting gas, such as $O_2$ and NO.

[0013] The valve according to JP 2000-291500 A is to cope with backfire; it cannot be applied to high pressure and high concentrated fluorine gas. The linear servo valve according to JP Utility Model H05-62704 A is devised to air-cool the coil and bobbin; it cannot be applied to high pressure and high concentrated fluorine gas, either.

When introducing a highly corrosive halogen gas such as fluorine gas through a supply valve from a container filled with the halogen gas at high pressure, the halogen gas is easy to raise the temperature inside an introduction valve provided on the introduction side and to cause surface corrosion inside the valve chest and deterioration of a seal of the introduction valve.

This invention is made to overcome the aforementioned problems; it aims to inhibit increase in temperature in the valve chest of the introduction valve for directing halogen-containing gas to an external apparatus and to inhibit surface corrosion in the valve chest of the introduction valve and deterioration of the seal used in the introduction valve.

An aspect of the invention is a halogen-containing gas supply apparatus for supplying a halogen-containing gas from a container filled with the halogen-containing gas at a high pressure to an external apparatus, the halogen-containing gas supply apparatus including: a supply tube connecting the container and the external apparatus; a supply valve attached to the supply tube to supply the halogen-containing gas from the container; and a shock wave prevention mechanism installed downstream of the supply valve to prevent generation of a shock wave.

An aspect of the invention provides halogen-containing gas to an external apparatus through a shock wave prevention mechanism, thereby inhibiting increase in temperature in the valve chest of the introduction valve for directing halogen-containing gas to the external apparatus and surface corrosion in the valve chest of the introduction valve and deterioration of the seal used in the introduction valve.

## BRIEF DESCRIPTION OF THE DRAWINGS

FIG. 1 is a systematic diagram of a halogen-containing gas supply apparatus in the first embodiment of this invention;
FIG. 2 is a schematic view of a shock wave prevention mechanism in Example 1-1 in the first embodiment;
FIG. 3A is a schematic perspective view of a shock wave prevention mechanism in Example 1-2 in the first embodiment;
FIG. 3B is a schematic cross-sectional view of a shock wave prevention mechanism in Example 1-2 in the first embodiment;
FIG. 4 is a schematic view of a shock wave prevention mechanism in Examples 1-3 and 1-5 in the first embodiment;
FIG. 5 is a schematic diagram of a shock wave prevention mechanism in Example 1-4 in the first embodiment;
FIG. 6 is a systematic diagram of a halogen-containing gas supply apparatus in the second embodiment of this invention;
FIG. 7 is a schematic diagram of an apparatus used in Examples 2-1 to 2-22 in the second embodiment;
FIG. 8 is an external perspective view of a flow direction change mechanism in Examples 2-1, 2-4 to 2-12, 2-15 to 2-22 in the second embodiment;
FIG. 9 is a schematic cross-sectional view of a flow direction change mechanism in Examples 2-1, 2-4 to 2-12, 2-15 to 2-22 in the second embodiment;
FIG. 10 is a schematic cross-sectional view cut along line A-A in FIG. 9;
FIG. 11 is a schematic cross-sectional view of a flow direction change mechanism in Example 2-2 in the second embodiment;
FIG. 12 is a schematic cross-sectional view of a flow direction change mechanism in Example 2-3 in the second embodiment;
FIG. 13 is a schematic cross-sectional view of a flow direction change mechanism in Example 2-13 in the second embodiment;
FIG. 14 is a schematic cross-sectional view of a flow direction change mechanism in Example 2-14 in the second embodiment;
FIG. 15 is a schematic diagram of an apparatus in comparative examples in the second embodiment;
FIG. 16 is a systematic diagram of a halogen-containing gas supply apparatus in an example in the third embodiment of this invention;
FIG. 17 is a schematic diagram of an apparatus in Examples 3-1 and 3-4 to 3-21 and Comparative Example 3-2 in the third embodiment;
FIG. 18 is a schematic diagram of an apparatus in Example 3-2 in the third embodiment;
FIG. 19 is a schematic diagram of an apparatus in Example 3-3 in the third embodiment;
FIG. 20 is a schematic diagram of an apparatus in Comparative Example 3-1 in the third embodiment;
FIG. 21 is a systematic diagram of a halogen-containing gas supply apparatus in the fourth embodiment of this invention;
FIG. 22 is a schematic diagram of an apparatus in Examples 4-1 to 4-20 and Comparative Example 4-2 in the fourth embodiment;
FIG. 23 is a schematic diagram of a rectilinearity inhibition mechanism in Examples 4-1 and 4-3 to 4-20 and Comparative Example 4-2 in the fourth embodiment;
FIG. 24 is a schematic diagram of a rectilinearity inhibition mechanism in Example 4-2 in the fourth embodiment; and
FIG. 25 is a schematic diagram of an apparatus in Comparative Example 4-1 in the fourth embodiment.

## DETAILED DESCRIPTION OF THE EMBODIMENTS

Hereinafter, embodiments of this invention will be described.

<FIRST EMBODIMENT>

First, a halogen-containing gas supply apparatus in a first embodiment of this invention is described.
A halogen-containing gas supply apparatus in the first embodiment supplies a halogen-containing gas from a container filled with the halogen-containing gas at a high pressure to an external apparatus; the halogen-containing gas supply apparatus includes a supply tube connecting the container and the external apparatus, a supply valve attached to the supply tube to supply the halogen-containing gas from the container, and a shock wave prevention mechanism installed downstream of the supply valve to prevent generation of a shock wave.

The external apparatus may be a semiconductor manufacturing apparatus for manufacturing semiconductor devices, MEMS devices, TFT panels for liquid crystal, or semiconductors used in solar cells. The halogen-containing gas is used as cleaning process gas or etching process gas in manufacturing semiconductors.

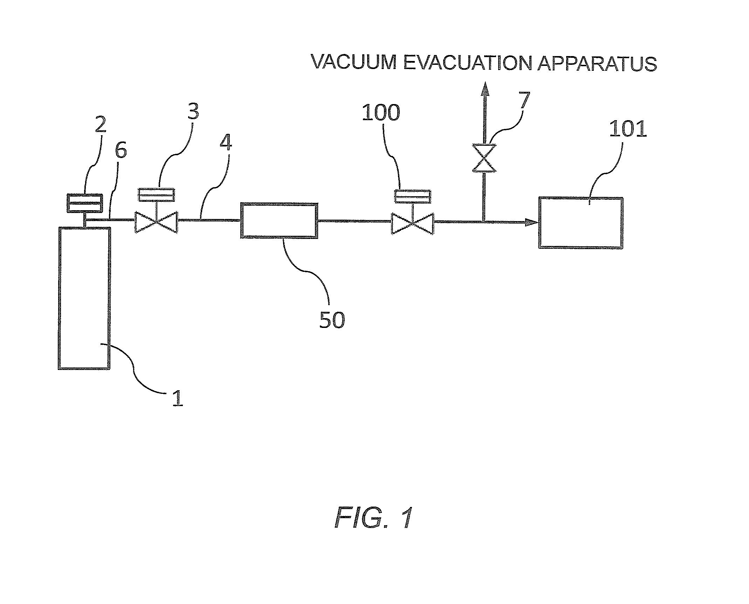

Hereinbelow, with reference to FIG. 1, a halogen-containing gas supply apparatus and a halogen-containing gas supply method in the first embodiment are described in detail.

A container 1 filled with halogen-containing gas at high pressure has an on-off valve 2 and can enclose the high-pressure gas tightly. The container 1 and the external apparatus 101 are connected by a supply tube 4. To the supply tube 4, a supply valve 3 is attached to supply halogen-containing gas from the container 1. The container 1 and the supply valve 3 can form a supply apparatus for supplying halogen-containing gas. Downstream of the supply valve 3, a shock wave prevention mechanism 50 is installed to prevent generation of a shock wave. Downstream of the shock wave prevention mechanism 50, an introduction valve 100 is installed to introduce the halogen-containing gas to the external apparatus 101. The introduction valve 100 may be installed inside the external apparatus 101 or inside the halogen-gas containing gas supply apparatus.

The supply valve 3 is opened to supply the halogen-containing gas in the container 1 to the external apparatus 101 via the shock wave prevention mechanism 50 and the introduction valve 100. The container 1 may be used singularly or a plurality of containers coupled in parallel may be used for it. The number of containers 1 is not particularly limited.

The container 1 may have any structure if it has gas tightness enough to keep a high pressure of at least 5 MPaG or more and is able to discharge halogen-containing gas with the on-off valve 2. Desirably, it is preferable to have gas tightness to keep a high pressure of 20 MPaG or more.

For the material of the container 1, one having corrosion-resistance to the contained halogen gas is preferred, for example, manganese steel, stainless steel, or a nickel alloy (such as Hastelloy, Inconel, and Monel).

The halogen in the halogen-containing gas is fluorine, chlorine, bromine, or iodine; alternatively, it may be a mixture of two or more kinds of them.

The halogen-containing gas may be any kind of gas if it contains a halogen: it may be a mixture of one of the halogen gases of fluorine gas, chlorine gas, bromine gas, and iodine gas or a halogen compound gas such as $NF_3$, $BF_3$, $ClF$, $ClF_3$, or $IF_7$ and an inactive gas such as $N_2$ Ar, or He. Alternatively, it may be a mixture of an inactive gas and a mixed gas of a halogen gas and a halogen compound gas.

The concentration of the halogen gas or the halogen compound gas in the halogen-containing gas are not particularly limited; for example, the concentration of at least any one of fluorine gas, chlorine gas, bromine gas, iodine gas, $NF_3$ gas, $BF_3$ gas, $ClF$ gas, $ClF_3$ gas, and $IF_7$ gas may range from 0.1 vol% to 100 vol%.

The filling pressure for the halogen-containing gas is preferably 5 MPaG to 20 MPaG. At a pressure lower than 5 MPaG, the temperature inside the introduction valve 100 located on the introduction side is hard to increase; the surface inside the introduction valve 100 is hard to corrode; and a seal used in the introduction valve 100 is hard to deteriorate. On the other hand, a pressure higher than 20 MPaG is not preferable because this invention can eliminate the temperature inside the introduction valve 100 from increased but the gas contact surface is easily corroded by the halogen gas.

When halogen-containing gas is supplied by the supply valve 3 and the velocity of movement of the supplied gas reaches a certain level, a shock wave is generated. In general, the velocity to generate this shock wave is denoted in Mach number expressed by the following formula (1):

$$\text{Mach number (M) = Velocity of the fluid (V) / Speed of sound (a) ... (1)}$$

Here, the speed of sound (a) in a gas is expressed by the following formula (2) using the specific heat ratio of the gas ($\kappa$), the gas constant (R), the temperature of the gas (T), and the average molecular weight of the gas (M):

$$a = \sqrt{\kappa RT/M} \, ...(2)$$

If the Mach number of the gas velocity obtained by the above formulae (1) and (2) is 0.7 or more and less than 1.2, a shock wave might be generated depending on the diameter and the length of the duct for conveying the gas. If the Mach number of the gas velocity is 1.2 or more, a shock wave is generated because of the movement of the gas.

Accordingly, to prevent generation of a shock wave because of movement of gas, it is necessary to reduce the velocity of movement of the gas to less than Mach number 0.7.

Specifically, if the halogen-containing gas is 100% fluorine gas, generation of a shock wave can be prevented by controlling the velocity of movement of the gas at less than 211.48 m/s since the speed of sound at 25°C is 302.12 m/s.

In addition, since a shock wave generated by movement of gas has high rectilinearity in propagation, changing the direction of movement of the gas helps the generated shock wave disperse to inhibit growth of the shock wave.

The shock wave prevention mechanism 50 is a shock wave inhibition mechanism for inhibiting generation of a shock wave or a shock wave attenuation mechanism for attenuating a generated shock wave noting the above-described nature of the shock wave.

Specific examples of shock wave inhibition mechanism for inhibiting generation of shock wave are provided below.

The first shock wave inhibition mechanism has a structure for limiting the gas flow: for example, a valve, a straight tube, or an orifice. With this mechanism, the velocity of movement of the gas is reduced downstream of the point limiting the gas flow; accordingly, generation of shock wave can be inhibited.

The second shock wave inhibition mechanism includes, in addition to the first shock wave inhibition mechanism, a bypass tube bypassing the structural part for limiting the gas flow and an on-off valve attached to the bypass tube. With this mechanism, the entire shock wave inhibition mechanism is first charged with the gas from the structural part for limiting the gas flow at a speed as slow as shock wave will not be generated; then, the on-off valve is opened for the gas to flow through the bypass tube. Accordingly, when the gas is supplied to the external apparatus, the gas is also flowing in the bypass tube, so that the volume of flow to be supplied is increased.

Next, specific examples of shock wave attenuation mechanism for attenuating a generated shock wave are provided below.

The first shock wave attenuation mechanism is a mechanism including a coiled duct. Since the duct in this mechanism is coil-shaped, the gas does not flow straight through the duct. Accordingly, growth of the shock wave in the duct is inhibited so that the shock wave attenuates.

The second shock wave attenuation mechanism is a mechanism including a baffle installed in the duct. Since this mechanism discontinuously changes the direction of gas flow, growth of the shock wave in the duct is inhibited so that the shock wave attenuates.

The structure of the shock wave prevention mechanism employed in this invention is not particularly limited if it includes a mechanism for inhibiting generation of shock wave or attenuating the generated shock wave based on the above-described nature of shock wave.

Opening the supply valve 3 to supply high-pressure halogen-containing gas is easy to cause increase in temperature inside the introduction valve 100 for introducing the halogen-containing gas to the external device 101, surface corrosion inside the chest of the introduction valve 100, and deterioration of a seal used in the introduction valve 100. This is presumed because the opening the supply valve 3 causes generation of a shock wave in the supply tube 4 for conveying halogen-containing gas and the generated shock wave grows in the process of propagation to reach the introduction valve 100, so that the temperature inside the introduction tube 100 increases. Therefore, the first embodiment supplies halogen-containing gas to the introduction valve 100 via the shock wave prevention mechanism 50 to inhibit generation or the growth of a shock wave between the supply valve 3 and the introduction valve 100. This approach inhibits increase in temperature inside the introduction valve 100, surface corrosion inside the chest, and deterioration of the seal in the introduction valve 100.

Hereinafter, examples of the first embodiment are described.

[Example 1-1]

FIG. 1 illustrates a systematic diagram of this example. A manganese steel container 1 is filled with 20 vol% $F_2$ gas diluted with $N_2$ at a pressure of 5 MPaG. The container 1 has an on-off valve 2, to which a straight stainless steel duct 6 having an inner diameter of 1.07 cm and a length of 20 cm is connected. To the duct 6, a supply tube 4 for connecting the container 1 and the external apparatus 101 is connected. To the supply tube 4, a supply valve 3 for supplying the $F_2$ gas from the container 1 is attached. Downstream of the supply valve 3, an introduction valve 100 for introducing the $F_2$ gas to the external apparatus 101 is installed. Between the supply valve 3 and the introduction valve 100, a shock wave prevention mechanism 50 is installed. Downstream of the introduction valve 100, a vacuum evacuation apparatus is connected via a manual valve 7. The vacuum evacuation apparatus is for exchanging the gas in the duct 6 and the supply tube 4.

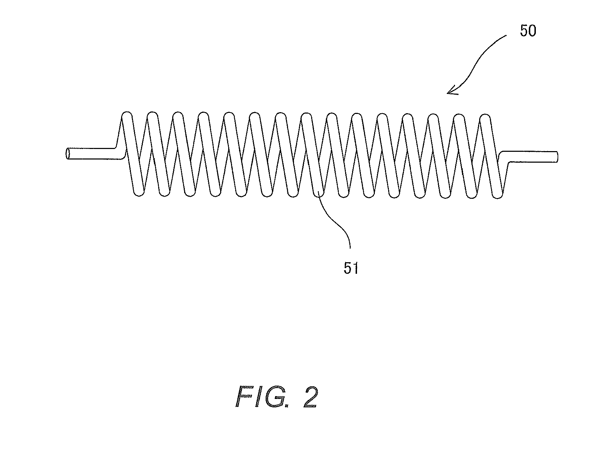

The shock wave prevention mechanism 50 is a spiral tube as shown in FIG. 2. Specifically, it is a stainless steel tube 51 having an inner diameter of 0.75 cm wound into a spiral having a diameter of 7 cm and 15 turns and is connected between the supply valve 3 and the introduction valve 100. The introduction valve 100 is a subject to damage evaluation. The material of a seal of the introduction valve 100 is PCTFE (polychlorotrifluoroethylene).

All the valves except for the on-off valve 2 of the container 1 are opened and the duct 6 and the supply tube 4 are evacuated into vacuum, then all the valves are closed. Thereafter, the on-off valve 2 is opened to change the pressure to 5 MPaG in the duct 6 between the container 1 and the supply valve 3.

Next, the supply valve 3 is opened and the pressure in the section to the introduction valve 100 is kept at 5 MPaG for five minutes. After the five minutes, the on-off valve 2 is closed; the introduction valve 100 and the manual valve 7 are opened; and the duct 6 is evacuated into vacuum with the vacuum evacuation apparatus.

After 10 repeats of the above-described operations, the internal leakage of the introduction valve 100 was measured with a leak detector. The amount of leakage was $1.0 \times 10^{-8}$ Pa·m3/s or less; no leakage was found.

The introduction valve 100 was disassembled and the seal was visually inspected; no burn was observed on the seal.

[Example 1-2]

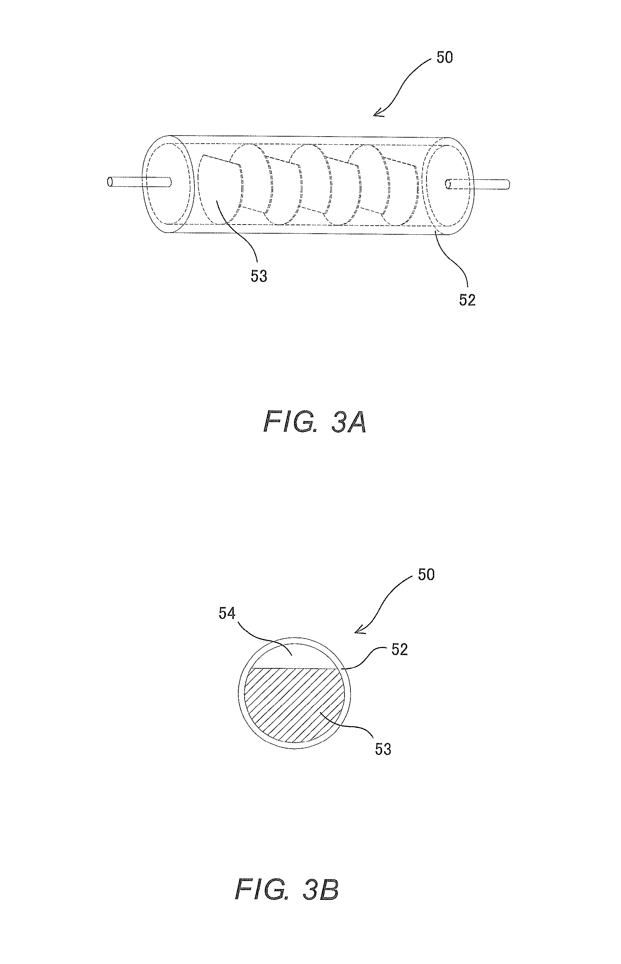

The shock wave prevention mechanism 50 includes, as shown in FIGS. 3A and 3B, a stainless steel tube 52 having an inner diameter of 5.27 cm and a length of 20 cm and a plurality of partially cut out stainless steel baffles disposed inside the stainless steel tube 52. FIG. 3A is a perspective view of the shock wave prevention mechanism 50 and FIG. 3B is a cross-sectional view of the shock wave prevention mechanism 50. Except for the shock wave prevention mechanism 50, the configuration of this example is the same as that of Example 1-1. The same operations as those in Example 1-1 were performed.

Each baffle 53 has an outer diameter substantially the same as the inner diameter of the stainless steel tube 52 and is placed in such a manner that its outer circumference is in contact with an inner circumference of the stainless steel tube 52. In the state where a baffle 53 is inside the stainless steel tube 52, the baffle 53 is cut so that the area of the opening 54 through which halogen-containing gas can pass is 4.4 cm$^2$. Seven baffles 53 are disposed with equal spacing in such a manner that the openings 54 are staggered in the longitudinal direction of the stainless steel tube 52.

As a result, the amount of internal leakage of the introduction valve 100 measured by the leak detector was $1.0 \times 10^{-8}$ Pa·m$^3$/s or less; no leakage was found.

The introduction valve 100 was disassembled and the seal was visually inspected; no burn was observed on the seal.

[Example 1-3]

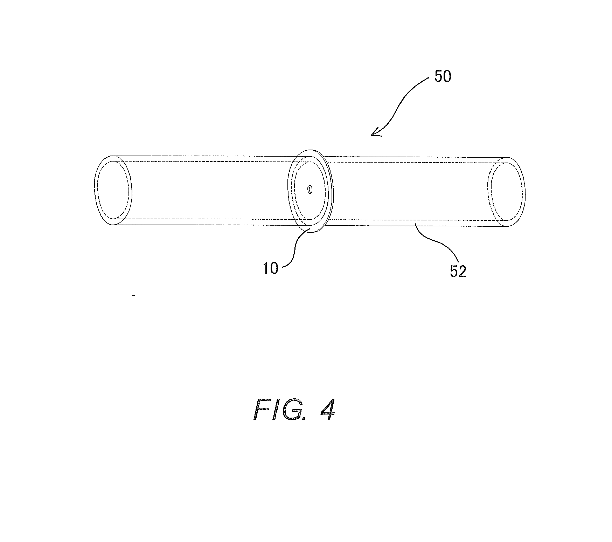

The shock wave prevention mechanism 50 is, as shown in FIG. 4, an orifice tube in which an orifice plate 10 is placed at the center of the inside of a stainless steel tube 52 having an inner diameter of 1.07 cm and a length of 20 cm.

In the orifice plate 10, a through hole having a diameter of 0.2 cm is provided at the center of a stainless steel disc having a diameter of 2 cm. The orifice plate 10 has an outer diameter substantially the same as the inner diameter of the stainless steel tube 52 and is placed in such a manner that its outer circumference will be in contact with the inner circumference of the stainless steel tube 52. Except for the shock wave prevention mechanism 50, the configuration of this example is the same as that of Example 1-1. The same operations as those in Example 1-1 were performed.

As a result, the amount of internal leakage of the introduction valve 100 measured by the leak detector was $1.0 \times 10^{-8}$ Pa·m$^3$/s or less; no leakage was found.

The introduction valve 100 was disassembled and the seal was visually inspected; no burn was observed on the seal.

[Example 1-4]

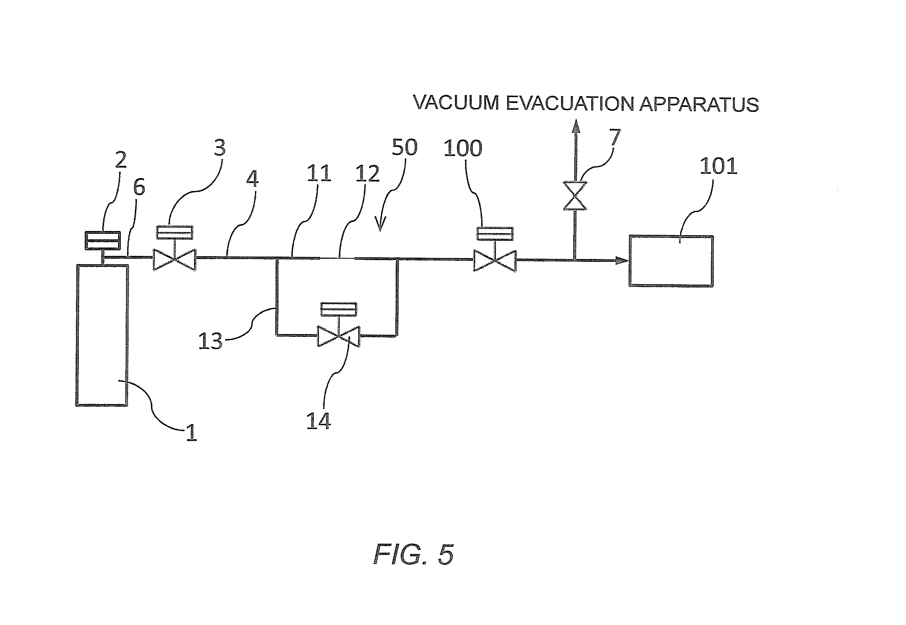

The shock wave prevention mechanism 50 includes, as shown in FIG. 5, a stainless steel main duct 11 having an inner diameter of 1.07 cm for conveying the gas, a stainless steel tube 12 having an inner diameter of 0.08 cm and a length of 10 cm provided in the main duct 11, a stainless steel bypass tube 13 having an inner diameter of 1.07 cm which is connected to the main duct 11 so as to bypass the tube 12, and an on-off valve 14 attached to the bypass tube 13. Except for the shock wave prevention mechanism 50, the configuration of this example is the same as that of Example 1-1. Similar operations as those in Example 1-1 were performed.

All the valves except for the on-off valve 2 of the container 1 are opened; the duct 6, the main duct 11, the tube 12, and the bypass tube 13 are evacuated into vacuum; and then all the valves are closed. Thereafter, the on-off valve 2 is opened to change the pressure to 5 MPaG in the duct 6 between the container 1 and the supply valve 3.

Next, the supply valve 3 is opened to let the gas flow through the tube 12 until the pressure in the section to the introduction valve 100 is increased to 5 MPaG; then the on-off valve 14 is opened and kept for five minutes. After the five minutes, the on-off valve 2 is closed; the manual valve 7 is opened; and the duct 6, the main duct 11, the tube 12, and the bypass tube 13 are evacuated into vacuum with the vacuum evacuation apparatus.

After 10 repeats of the foregoing operations, the internal leakage of the introduction valve 100 was measured with the leak detector. The amount of leakage was $1.0 \times 10^{-8}$ Pa·m$^3$/s or less; no leakage was found.

The introduction valve 100 was disassembled and the seal was visually inspected; no burn was observed on the seal.

[Example 1-5]

The shock wave prevention mechanism 50 employs an orifice tube used in Example 1-3, instead of the tube 12 in Example 1-4. Except for this, the configuration of this example is the same as that of Example 1-4. The same operations as those in Example 1-4 were performed.
As a result, the amount of internal leakage of the introduction valve 100 measured by the leak detector was $1.0\times10^{-8}Pa\cdot m^3/s$ or less; no leakage was found.
The introduction valve 100 was disassembled and the seal was visually inspected; no burn was observed on the seal.

[Example 1-6]

In this example, the container 1 is filled with 100 vol% $NF_3$ gas at a pressure of 14.7 MPaG. Except for this, the configuration of this example is the same as that of Example 1-1. The same operations as those in Example 1-1 were performed.
As a result, the amount of internal leakage of the introduction valve 100 measured by the leak detector was $1.0\times10^{-8}Pa\cdot m^3/s$ or less; no leakage was found.
The introduction valve 100 was disassembled and the seal was visually inspected; no burn was observed on the seal.

[Example 1-7]

In this example, the container 1 is filled with 100 vol% $O_2$ gas at a pressure of 14.7 MPaG. Except for this, the configuration of this example is the same as that of Example 1-1. The same operations as those in Example 1-1 were performed.
As a result, the amount of internal leakage of the introduction valve 100 measured by the leak detector was $1.0\times10^{-8}Pa\cdot m^3/s$ or less; no leakage was found.
The introduction valve 100 was disassembled and the seal was visually inspected; no burn was observed on the seal.

[Example 1-8]

In this example, the container 1 is filled with 20 vol% $BF_3$ gas diluted with $N_2$ at a pressure of 14.7 MPaG. Except for this, the configuration of this example is the same as that of Example 1-1. The same operations as those in Example 1-1 were performed.
As a result, the amount of internal leakage of the introduction valve 100 measured by the leak detector was $1.0\times10^{-8}Pa\cdot m^3/s$ or less; no leakage was found.
The introduction valve 100 was disassembled and the seal was visually inspected; no burn was observed on the seal.

[Example 1-9]

In this example, the container 1 is filled with 20 vol% CIF gas diluted with $N_2$ at a pressure of 14.7 MPaG. Except for this, the configuration of this example is the same as that of Example 1-1. The same operations as those in Example 1-1 were performed.
As a result, the amount of internal leakage of the introduction valve 100 measured by the leak detector was $1.0\times10^{-8}Pa\cdot m^3/s$ or less: no leakage was found.
The introduction valve 100 was disassembled and the seal was visually inspected; no burn was observed on the seal.

[Example 1-10]

In this example, the container 1 is filled with 0.1 vol% $CIF_3$ gas diluted with $N_2$ at a pressure of 5 MPaG. Except for this, the configuration of this example is the same as that of Example 1-1. The same operations as those in Example 1-1 were performed.
As a result, the amount of internal leakage of the introduction valve 100 measured by the leak detector was 1.0×10⁻⁸Pa·m³/s or less; no leakage was found.

The introduction valve 100 was disassembled and the seal was visually inspected; no burn was observed on the seal.

[Example 1-11]

In this example, the container 1 is filled with 0.1 vol% $IF_7$ gas diluted with $N_2$ at a pressure of 5 MPaG. Except for this, the configuration of this example is the same as that of Example 1-1. The same operations as those in Example 1-1 were performed.

As a result, the amount of internal leakage of the introduction valve 100 measured by the leak detector was $1.0 \times 10^{-8}$ Pa·m³/s or less; no leakage was found.

The introduction valve 100 was disassembled and the seal was visually inspected; no burn was observed on the seal.

[Comparative Example 1-1]

Instead of the shock wave prevention mechanisms 50 described in Examples 1-1 to 1-4, a straight stainless steel tube having an outer diameter of 1/2 inches and a length of 200 mm is used to directly connect the supply valve 3 and the introduction valve 100. Except for this, the same experiment as that in Example 1-1 was conducted.

As a result, the amount of internal leakage of the introduction valve 100 measured by the leak detector was $1.3 \times 10^{-1}$ Pa·m³/s; the sealing was insufficient.

[Comparative Example 1-2]

In this comparative example, the container 1 is filled with 100 vol% $NF_3$ gas at a pressure of 14.7 MPaG. Except for this, the configuration is the same as that of Comparative Example 1-1. The same operations as those in Comparative Example 1-1 were performed.

As a result, the amount of internal leakage of the introduction valve 100 measured by the leak detector was $1.0 \times 10^{-8}$ Pa·m³/s or less; no leakage was found.

However, when the introduction valve 100 was disassembled and the seal was visually inspected, burn on the seal was observed.

[Comparative Example 1-3]

In this comparative example, the container 1 is filled with 100 vol% $O_2$ gas at a pressure of 14.7 MPaG. Except for this, the configuration is the same as that of Comparative Example 1-1. The same operations as those in Comparative Example 1-1 were performed.

As a result, the amount of internal leakage of the introduction valve 100 measured by the leak detector was $1.0 \times 10^{-8}$ Pa·m³/s or less; no leakage was found.

However, when the introduction valve 100 was disassembled and the seal was visually inspected, burn on the seal was observed.

[Comparative Example 1-4]

In this comparative example, the container 1 is filled with 20 vol% $BF_3$ gas diluted with $N_2$ at a pressure of 14.7 MPaG. Except for this, the configuration is the same as that of Comparative Example 1-1. The same operations as those in Comparative Example 1-1 were performed.

As a result, the amount of internal leakage of the introduction valve 100 measured by the leak detector was $1.0 \times 10^{-8}$ Pa·m³/s or less; no leakage was found.

However, when the introduction valve 100 was disassembled and the seal was visually inspected, burn on the seal was observed.

[Comparative Example 1-5]

In this comparative example, the container 1 is filled with 20 vol% ClF gas diluted with $N_2$ at a pressure of 14.7 MPaG. Except for this, the configuration is the same as that of Comparative Example 1-1. The same operations as those in Comparative Example 1-1 were performed.

As a result, the amount of internal leakage of the introduction valve 100 measured by the leak detector was

$1.0 \times 10^{-8}$ Pa·m$^3$/s or less; no leakage was found.

However, when the introduction valve 100 was disassembled and the seal was visually inspected, burn on the seal was observed.

[Comparative Example 1-6]

In this comparative example, the container 1 is filled with 0.1 vol% ClF$_3$ gas diluted with N$_2$ at a pressure of 5 MPaG. Except for this, the configuration is the same as that of Comparative Example 1-1. The same operations as those in Comparative Example 1-1 were performed.

As a result, the amount of internal leakage of the introduction valve 100 measured by the leak detector was $10 \times 10^{-8}$ Pa·m$^3$/s or less; no leakage was found.

However, when the introduction valve 100 was disassembled and the seal was visually inspected, burn on the seal was observed.

[Comparative Example 1-7]

In this comparative example, the container 1 is filled with 0.1 vol% IF$_7$ gas diluted with N$_2$ at a pressure of 5 MPaG. Except for this, the configuration is the same as that of Comparative Example 1-1. The same operations as those in Comparative Example 1-1 were performed.

As a result, the amount of internal leakage of the introduction valve 100 measured by the leak detector was $1.0 \times 10^{-8}$ Pa·m$^3$/s or less; no leakage was found.

However, when the introduction valve 100 was disassembled and the seal was visually inspected, burn of the seal was observed.

The first embodiment has described an apparatus for supplying a halogen-containing gas from a container 1 filled with the halogen-containing gas at a high pressure to the external apparatus 101. However, as described in Example 1-7 and Comparative Example 1-3, the same effects can be obtained in the case of using a supporting gas such as O$_2$ or NO instead of the halogen-containing gas. In other words, this invention is viable under the same configuration except that the applied gas is replaced from a halogen-containing gas into a supporting gas.

Specifically, this invention is viable even if configured as a supporting gas supply apparatus for supplying a supporting gas from a container filled with the supporting gas at a high pressure to an external apparatus, including a supply tube connecting the container and the external apparatus, a supply valve attached to the supply tube to supply the halogen-containing gas from the container, and a shock wave prevention mechanism installed downstream of the supply valve to prevent generation of a shock wave.

Furthermore, this invention is viable even if configured as a supporting gas supply method of supplying a supporting gas from a container filled with the supporting gas at a high pressure to an external apparatus, including opening a supply valve to direct the halogen-containing gas filled in the container at a high pressure to the external apparatus via a shock wave prevention mechanism for preventing generation of a shock wave.

Preferably, the filling pressure for the supporting gas is 5 MPa or more and 20 MPa or less.

This configuration employing a supporting gas likewise supplies the supporting gas to the external apparatus via the shock wave prevention mechanism for preventing generation of a shock wave; accordingly, it can inhibit surface corrosion of the introduction valve for introducing the supporting gas to the external apparatus and deterioration of a seal used in the introduction valve.

<SECOND EMBODIMENT>

Next, a halogen-containing gas supply apparatus in a second embodiment of this invention is described. The following description mainly explains differences from the above-described first embodiment; the components same as those in the first embodiment are denoted by the same reference signs and explanations thereof are omitted.

The halogen-containing gas supply apparatus in the second embodiment is featured by a flow direction change mechanism for changing the direction of halogen-containing gas flow, which is provided inside a part of the supply tube downstream of the supply valve to function as a shock wave prevention mechanism in the first embodiment. Still downstream of the flow direction change mechanism, an introduction valve is installed to introduce the halogen-containing gas to the external apparatus.

Hereinafter, the halogen-containing gas supply apparatus in the second embodiment is described in detail.

The structure of the flow direction change mechanism for changing the direction of halogen-containing gas flow is not particularly limited as long as it can change the direction of gas flow in the tube. For example, a structure such that a plurality of baffles each having an opening are disposed inside the tube in the longitudinal direction of the tube to partially blocks gas flow or that a plurality of fillers are enclosed in the tube is preferred.

It is preferable that the area of the opening of the baffle be 1/2 or smaller than the cross-sectional area of the tube perpendicular to the longitudinal direction of the tube. The baffles are disposed with spaces in such a manner that the openings of adjacent baffles do not overlap in the longitudinal direction of the tube. The spacing of the baffles is not particularly limited; they may be equally spaced or not in the case of three or more baffles.

The shapes of the fillers are not particularly limited, but shapes that change the direction of gas flow on the surface or inside the fillers when the gas hits the fillers are preferred; for example, shapes similar to those of packing materials commonly used in gas-liquid contact, such as Raschig ring, Tellerette, Pall ring, saddle, Lessing ring, Berl ring, Heli pack, McMahon packing, and Sulzer packing, a ball shape, and a wire shape are preferred.

It is preferable to provide a stoppage for the fillers downstream of the part packed with the fillers so as to prevent the gas flow from conveying the fillers downstream. For example, it is preferable that the tube be shaped in such a manner that at least a part of the tube has an inner diameter smaller than the packed part downstream of the packed part or that the tube be fitted with a porous plate downstream of the packed part, for the fillers to be enclosed in the tube. It is more preferable that, upstream of the packed part, the tube be likewise shaped to have a part having an inner diameter smaller than the packed part or be fitted with a porous plate for the fillers to be enclosed in the tube.

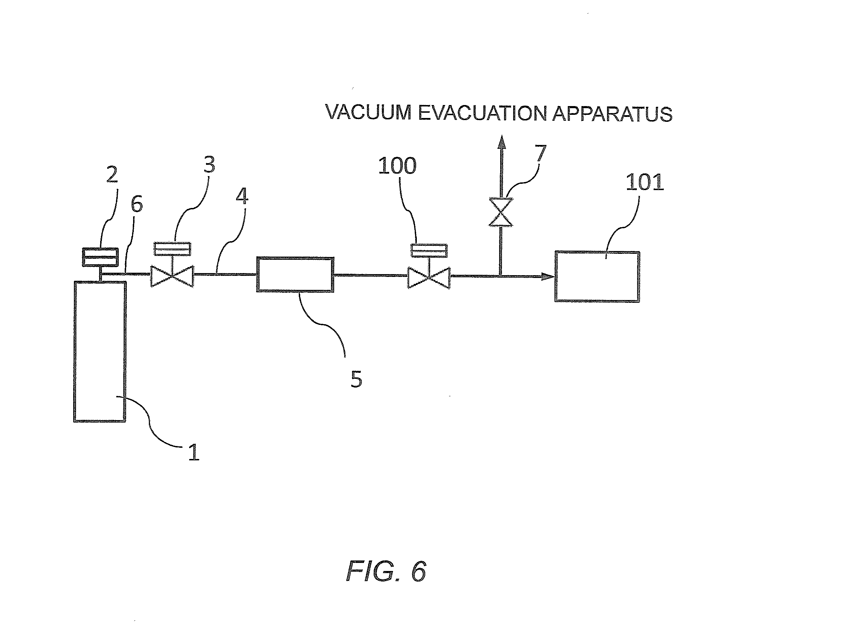

Explanation is provided with reference to FIG. 6. The basic configuration of the halogen-containing gas supply apparatus in the second embodiment is the same as that in the first embodiment shown in FIG. 1.

Between the supply valve 3 and the introduction valve 100 in the supply tube 4, a flow direction change mechanism 5 for changing the direction of gas flow is installed for a shock wave prevention mechanism. For example, the flow direction change mechanism 5 is configured as follows: a plurality of baffles each having an opening are disposed inside the tube in the longitudinal direction thereof to change the direction of a gas flow; the area of the opening is 1/2 or smaller than the cross-sectional area of the tube; and the baffles are disposed in such a manner that the openings of adjacent baffles do not overlap in the longitudinal direction of the tube. The on-off valve 2 and the supply valve 3 are diaphragm valves in which gas contact parts are all metal.

In FIG. 6, in the state where the supply valve 3 is open and the on-off valve 2 and the introduction valve 100 are closed, the duct 6 and the supply tube 4 between the on-off valve 2 and the introduction valve 100 are evacuated into vacuum with the vacuum evacuation apparatus. Next, the supply valve 3 is closed and the on-off valve 2 is opened to charge the duct 6 between the container 1 and the supply valve 3 with halogen-containing gas. Then, the supply valve 3 is opened to raise the pressure inside the supply tube 4 between the supply valve 3 and the introduction valve 100 until the internal pressure becomes stable. Through these operations, the halogen-containing gas is ready to be supplied to the external apparatus 101.

When supplying a high-pressure halogen-containing gas by opening the supply valve 3, the introduction valve 100 for introducing the halogen-containing gas to the external apparatus 101 easily suffers from elevation of its internal temperature, surface corrosion inside the chest of the introduction valve 100, and deterioration of a seal used in the introduction valve. This is presumed because the opening of the supply valve 3 causes generation of a shock wave in the supply tube 4 for conveying the halogen-containing gas and the generated shock wave grows in the process of propagation to reach the introduction valve 100, so that the temperature inside the introduction valve 100 increases. Therefore, the second embodiment provides a flow direction change mechanism 5 in the supply tube 4 between the supply valve 3 and the introduction valve 100 to inhibit generation or the growth of a shock wave. This approach inhibits increase in temperature inside the introduction valve 100, surface corrosion inside the chest of the introduction valve 100, and deterioration of the seal in the introduction valve 100.

The supply tube 4 may have a plurality of flow direction change mechanisms 5 for changing the direction of halogen-containing gas flow. For example, the plurality of flow direction change mechanisms 5 may be disposed in series or in parallel.

It is desirable to use a metallic material for the on-off valve 2 of the container 1, the supply valve 3, the supply tube 4, the introduction valve 100, and the flow direction change mechanism 5 in the parts to contact with halogen-containing gas. The metallic material may be stainless steel, Inconel, or Hastelloy.

The valve structures of the on-off valve 2 and the supply valve 3 are not particularly limited.

Hereinafter, examples of the second embodiment are described.

[Example 2-1]

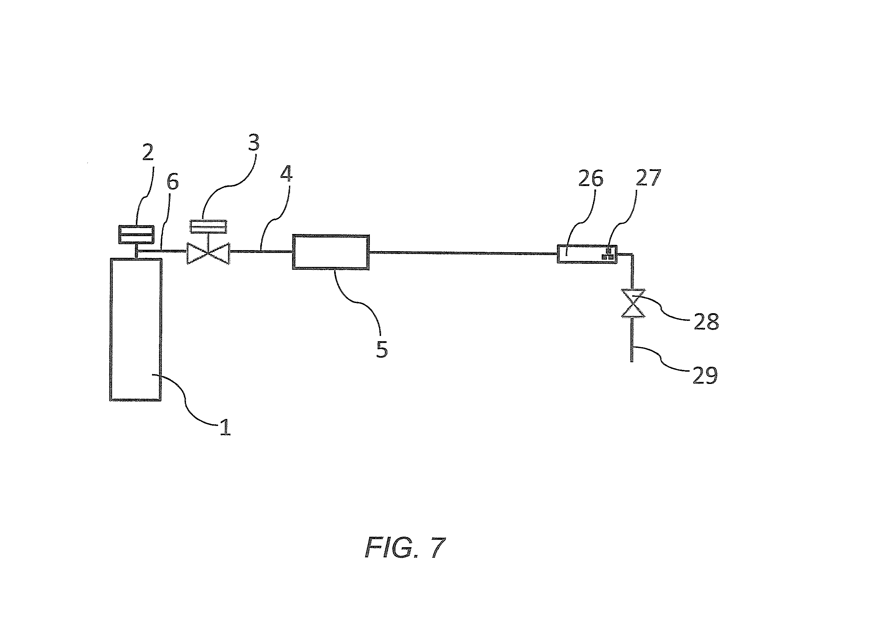

FIG. 7 is a schematic diagram of this example. A manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1/2 inches, a wall thickness of 1 mm, and a length of 200 mm. Downstream of the supply valve 3, a stainless steel supply tube 4 made to the same dimensional standard as the duct 6 is connected. In the middle of the supply tube 4, a flow direction change mechanism 5 is installed. Downstream of the flow direction change mechanism 5, a 50 cc stainless steel cylinder 26 is connected. Downstream of the cylinder 26, a vacuum line 29 is connected via a manual valve 28.

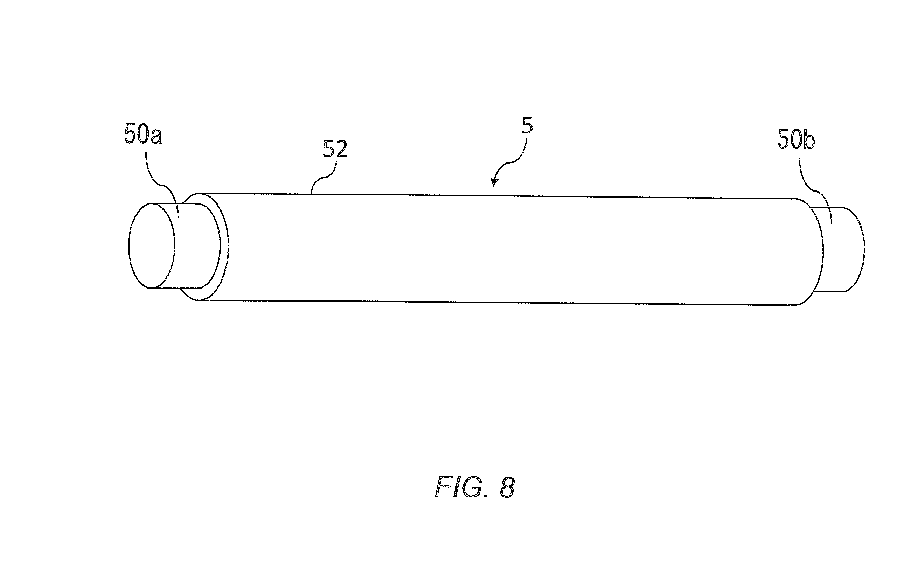

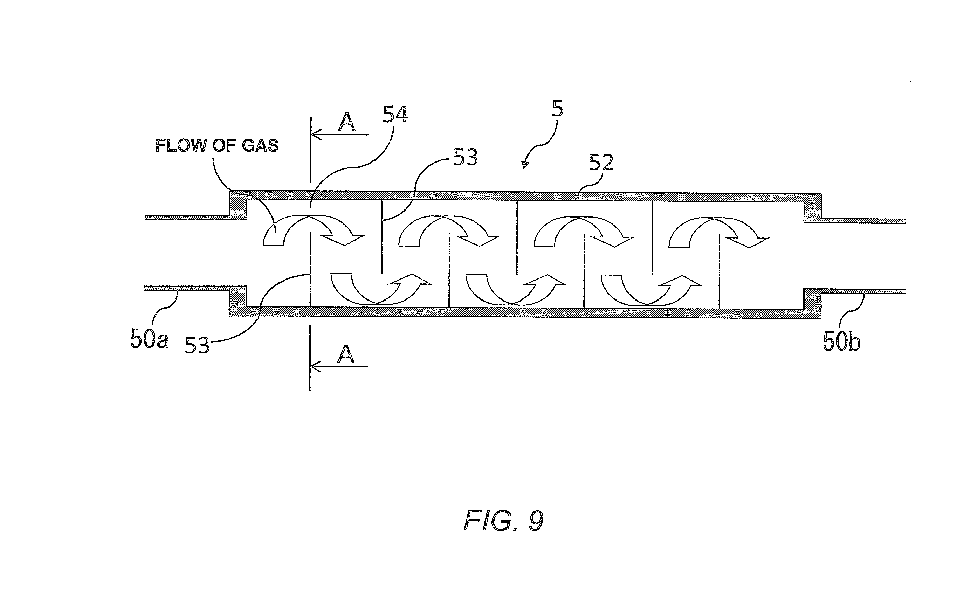

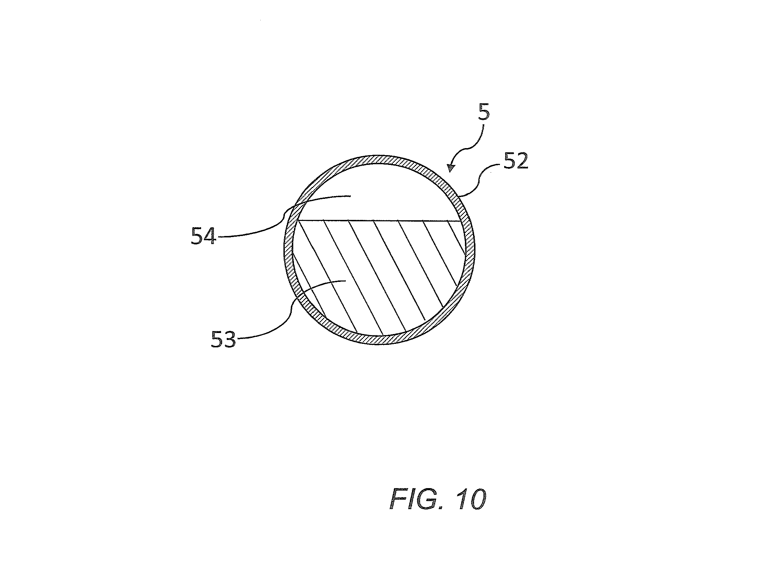

With reference to FIGS. 8 to 10, the flow direction change mechanism 5 is described. FIG. 8 is an external perspective view of the flow direction change mechanism 5; FIG. 9 is a schematic cross-sectional view of the flow direction change mechanism 5; and FIG. 10 is a schematic cross-sectional view cut along the line A-A in FIG. 9.

The flow direction change mechanism 5 includes a stainless steel tube 52 having an outer diameter of 20 mm, a wall thickness of 2 mm, and a length of 100 mm and seven rib-like stainless steel baffles 53 disposed inside the stainless steel tube 52. Each of the baffles 53 has a cutout.

Each baffle 53 has an outer diameter substantially the same as the inner diameter of the stainless steel tube 52 in the arc part. The baffle 53 is placed perpendicular to the inner surface of the stainless steel tube 52 so that the arc of the outer circumference of the baffle is fitted to the inner circumference of the stainless steel tube 52, making an opening 54. The seven baffles 53 are disposed in such a manner that they have equal spaces of 10 mm in the longitudinal direction of the stainless steel tube 52 and the openings 54 of adjacent baffles 53 are staggered, to change the direction of gas flow from upstream to downstream. The cross-sectional area of the opening 54 in the direction perpendicular to the longitudinal direction of the stainless steel tube 52 is 0.25 times of the cross-sectional area of the internal space of the stainless steel tube 52 in the same direction. On the upstream side and the downstream side of the flow direction change mechanism 5, stainless steel tubes 50a and 50b having an outer diameter of 1/2 inches and a wall thickness of 1 mm are respectively connected. The flow direction change mechanism 5 is connected in the middle of the supply tube 4 via the tubes 50a and 50b.

As shown in FIG. 7, in the bottom of the downstream end in the cylinder 26, 3 mm square PCTFE (polychlorotrifluoroethylene) chips 27 are enclosed.

The on-off valve 2 and the supply valve 3 are all-metal automatic diaphragm valves. The manual valve 28 and the vacuum line 29 are for exchanging the gas inside the duct 6 and the supply tube 4.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.


[Example 2-2]

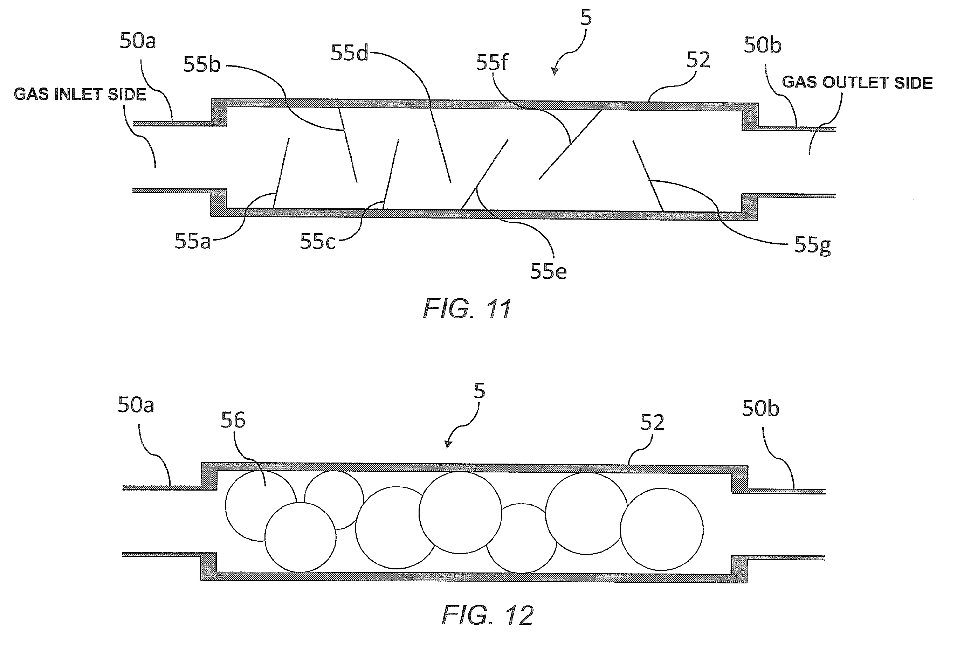

This example is the same as Example 2-1 except that the flow direction change mechanism 5 has the structure shown in FIG. 11. Comparing the flow direction change mechanism 5 of this example with that of Example 2-1, seven baffles 55a, 55b, 55c, 55d, 55e, 55f, and 55g are disposed inside the stainless steel tube 52 in this order from the gas inlet side to the gas outlet side. Except for the angles and spacing of installation of the seven baffles 55a to 55g, the configuration is the same as that of Example 2-1.

The installation angle for each of the baffles 55a to 55g is defined as an angle between the baffle and the inner surface of the tube 52 on the gas outlet side at the point where the distance between the cutout line of the baffle and the part of the baffle which is in contact with the inner surface of the tube 52 is largest. In this example, the installation angles of the baffles 55a to 55g are 85° for the baffle 55a, 82° for the baffle 55b, 84° for the baffle 55c, 81° for the baffle 55d, 77° for the baffle 55e, 115° for the baffle 55f, and 110° for the baffle 55g.

The space between the baffles 55a to 55g is defined as a space between planes in the direction perpendicular to the longitudinal direction of the tube 52 at the points where the linear components perpendicular to and longest from the cutout lines of the baffles 55a to 55g are in contact with the inner surface of the tube 52. In this example, the space between the baffle 55a and the baffle 55b is 14 mm; the space between the baffle 55b and the baffle 55c is 9 mm; the space between the baffle 55c and the baffle 55d is 9 mm; the space between the baffle 55d and the baffle 55e is 11 mm; the space between the baffle 55e and the baffle 55f is 17 mm; and the space between the baffle 55f and the baffle 55g is 10 mm.

The cross-sectional area of each opening 54 in the direction perpendicular to the longitudinal direction of the stainless steel tube 52 is 0.25 times of the cross-sectional area of the internal space of the tube 52 in the same direction.

The operations are the same as those in Example 2-1.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-3]

This example is the same as Example 2-1 except that the flow direction change mechanism 5 has the structure shown in FIG. 12. Instead of the baffles, eight stainless steel balls 56 are enclosed in the stainless steel tube 52 so that the downstream side of the flow direction change mechanism 5 cannot be seen through from the upstream side. The eight stainless steel balls 56 consist of one ball having a diameter of 10 mm, three balls having a diameter of 12 mm, and four balls having a diameter of 14 mm. On the upstream side and the downstream side of the flow direction change mechanism 5, stainless steel tubes 50a and 50b having an outer diameter of 1/2 inches and a wall thickness of 1 mm are respectively connected. The flow direction change mechanism 5 is connected in the middle of the supply tube 4 via the tubes 50a and 50b.

The operations are the same as those in Example 2-1.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-4]

In this example, the container 1 is filled with 20 vol% $F_2$ gas diluted with $N_2$ at a pressure of 14.7 MPaG. Except for this, the configuration of this example is the same as that of Example 2-1.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 14.7 MPaG in the duct 6 between the container 1 and the supply valve 3.

Furthermore, the supply valve 3 is opened to change the pressure in the duct between the container 1 and the cylinder 26 to 14.7 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-5]

In this example, the container 1 is filled with 10 vol% $Cl_2$ gas diluted with $N_2$ at a pressure of 5 MPaG. Except for this, the configuration of this example is the same as that of Example 2-1. The same operations as those in Example 2-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-6]

In this example, the container 1 is filled with 0.5 vol% $Br_2$ gas diluted with $N_2$ at a pressure of 5 MPaG. Except for this, the configuration of this example is the same as that of Example 2-1. The same operations as those in Example 2-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-7]

In this example, the container 1 is filled with 0.1 vol% iodine gas diluted with $N_2$ at a pressure of 5 MPaG. Except for this, the configuration of this example is the same as that of Example 2-1. The same operations as those in Example 2-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-8]

In this example, the container 1 is filled with 10 vol% $F_2$ + $Cl_2$ mixed gas (the volume fractions of $F_2$ and $Cl_2$ are 50 vol%) diluted with $N_2$ at a pressure of 5 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-9]

In this example, the container 1 is filled with 20 vol% $F_2$ gas diluted with $N_2$ at a pressure of 3.6 MPaG. Except for this, the configuration of this example is the same as that of Example 2-1.
Next, operations are described. In the state where the on-off valve 2 is closed and the other valves are open, the duct 6 and the supply tube 4 were evacuated into vacuum with the vacuum line 29. Thereafter, all valves are closed, and then the on-off valve 2 is opened to change the pressure to 3.6 MPaG in the duct 6 between the container 1 and the supply valve 3.
Furthermore, the supply valve 3 is opened to change the pressure in the duct between the container 1 and the cylinder 26 to 3.6 MPaG. Then, the on-off valve 2 is closed and the gas in the duct 6 and the supply tube 4 is exchanged with the vacuum line 29.
After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-10]

In this example, the container 1 is filled with 10 vol% $F_2$ gas diluted with $N_2$ at a pressure of 19 MPaG. Except for this, the configuration of this example is the same as that of Example 2-1.
Next, operations are described. In the state where the on-off valve 2 is closed and the other valves are open, the duct 6 and the supply tube 4 were evacuated into vacuum with the vacuum line 29. Thereafter, all valves are closed, and then the on-off valve 2 is opened to change the pressure to 19 MPaG in the duct 6 between the container 1 and the supply valve 3.
Furthermore, the supply valve 3 is opened to change the pressure in the duct between the container 1 and the cylinder 26 to 19 MPaG. Then, the on-off valve 2 is closed and the gas in the duct 6 and the supply tube 4 is exchanged with the vacuum line 29.
After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-11]

In this example, the container 1 is filled with 10 vol% $F_2$ gas diluted with $N_2$ at a pressure of 21 MPaG. Except for this, the configuration of this example is the same as that of Example 2-1.
Next, operations are described. In the state where the on-off valve 2 is closed and the other valves are open, the duct 6 and the supply tube 4 were evacuated into vacuum with the vacuum line 29. Thereafter, all valves are closed, and then the on-off valve 2 is opened to change the pressure to 21 MPaG in the duct 6 between the container 1 and the supply valve 3.
Furthermore, the supply valve 3 is opened to change the pressure in the duct between the container 1 and the cylinder 26 to 21 MPaG. Then, the on-off valve 2 is closed and the gas in the duct 6 and the supply tube 4 is exchanged with the vacuum line 29.
After 10 repeats of the above-described operations, the PCTFE chips 27 in the cylinder were taken out for visual inspection and weight loss rate measurement. As a result, a little change in color was observed on the surfaces of the chips but the weight loss rate was 0.5 mass% or less. Since the weight did not change and visual change was slight, the degree of burn of the PCTFE had no problem.

[Example 2-12]

In this example, the container 1 is filled with 50 vol% $F_2$ gas diluted with $N_2$ at a pressure of 5 MPaG. Except for this, the configuration of this example is the same as that of Example 2-1. The same operations as those in Example 2-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-13]

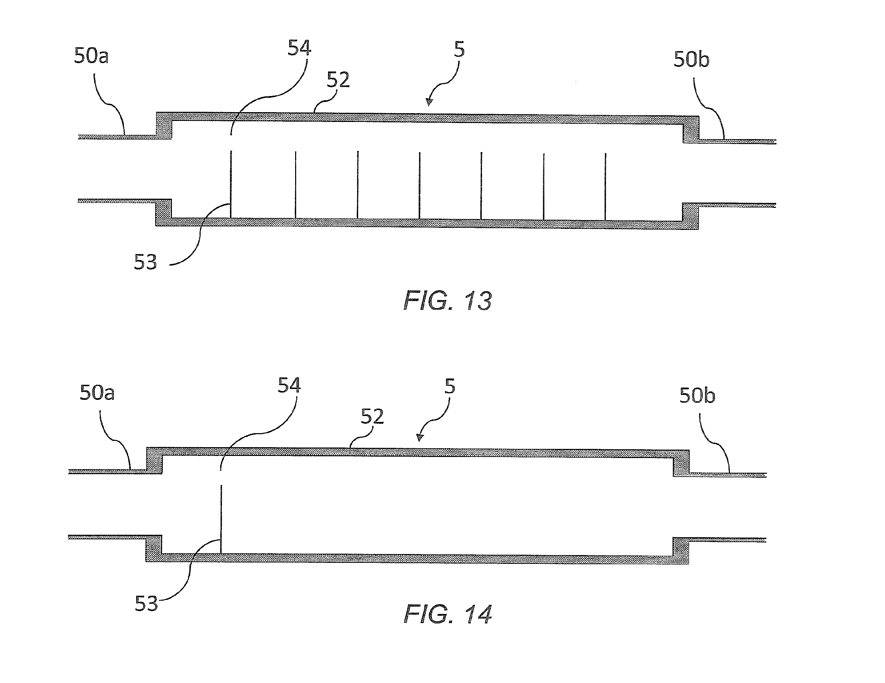

This example is the same as the Example 2-1 except that the flow direction change mechanism 5 has a structure shown in FIG. 13. The flow direction change mechanism 5 has the same configuration as that of Example 2-1 except that baffles 53 are disposed in such a manner that their openings 54 are aligned.

The operations are the same as those in Example 2-1.

After 10 repeats of the above-described operations, the PCTFE chips 27 in the cylinder 26 were taken out for visual inspection and weight loss rate measurement. As a result, change in color was observed on the surfaces of the chips but the weight loss rate was 0.5 mass% or less. Since the weight did not change and visual change was slight, the degree of burn of the PCTFE had no problem.

[Example 2-14]

This example is the same as the Example 2-1 except that the flow direction change mechanism 5 has a structure shown in FIG. 14. The flow direction change mechanism 5 has the same configuration as that of Example 2-1 except that only one baffle 53 closest to the gas inlet is provided.

The operations are the same as those in Example 2-1.

After 10 repeats of the above-described operations, the PCTFE chips 27 in the cylinder 26 were taken out for visual inspection and weight loss rate measurement. As a result, slight change in color was observed on the surfaces of the chips and the weight loss rate was 0.5 mass%. Although changes in color and weight were observed in this example, the degree of the change in color and the weight loss rate of the PCTFE chips were sufficiently small, compared with later-described Comparative Example 1.

[Example 2-15]

In this example, the cross-sectional area of the opening 54 perpendicular to the longitudinal direction of the stainless steel tube 52 is 0.4 times of the cross-sectional area of the internal space of the tube 52 in the same direction. Except for this, the configuration is the same as that of Example 2-1.

Next, operations are described. In the state where the on-off valve 2 is closed and the other valves are open, the duct 6 and the supply tube 4 were evacuated into vacuum with the vacuum line 29. Thereafter, all valves are closed, and then the on-off valve 2 is opened to change the pressure to 14.7 MPaG in the duct 6 between the container 1 and the supply valve 3.

Furthermore, the supply valve 3 is opened to change the pressure in the duct between the container 1 and the cylinder 26 to 14.7 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-16]

In this example, the cross-sectional area of the opening 54 perpendicular to the longitudinal direction of the stainless steel tube 52 is 0.6 times of the cross-sectional area of the internal space of the tube 52 in the same direction. Except for this, the configuration is the same as that of Example 2-1.

Next, operations are described. In the state where the on-off valve 2 is closed and the other valves are open, the duct 6 and the supply tube 4 were evacuated into vacuum with the vacuum line 29. Thereafter, all valves are closed, and then the on-off valve 2 is opened to change the pressure to 14.7 MPaG in the duct 6 between the container 1 and the supply valve 3.

Furthermore, the supply valve 3 is opened to change the pressure in the duct between the container 1 and the cylinder 26 to 14.7 MPaG. Then, the on-off valve 2 is closed and the gas in the duct 6 and the supply tube 4 is exchanged with the vacuum line 29.

After 10 repeats of the above-described operations, the PCTFE chips 27 in the cylinder 26 were taken out for visual inspection and weight loss rate measurement. As a result, change in color was observed on the surfaces of the chips but the weight loss rate was 0.5 mass% or less. Since the weight did not change and visual change was slight, the degree of burn of the PCTFE had no problem.

[Example 2-17]

In this example, the container 1 is filled with 100 vol% $NF_3$ gas at a pressure of 14.7 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-18]

In this example, the container 1 is filled with 100 vol% $O_2$ gas at a pressure of 14.7 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-19]

In this example, the container 1 is filled with 20 vol% $BF_3$ gas diluted with $N_2$ at a pressure of 14.7 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-20]

In this example, the container 1 is filled with 20 vol% CIF gas diluted with $N_2$ at a pressure of 14.7 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-21]

In this example, the container 1 is filled with 0.1 vol% $CIF_3$ gas diluted with $N_2$ at a pressure of 5 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 2-22]

In this example, the container 1 is filled with 0.1 vol% $IF_7$ gas diluted with $N_2$ at a pressure of 5 MPaG. Except for this, the configuration of this example is the same as that of Example 2-1. The same operations as those in Example 2-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Comparative Example 2-1]

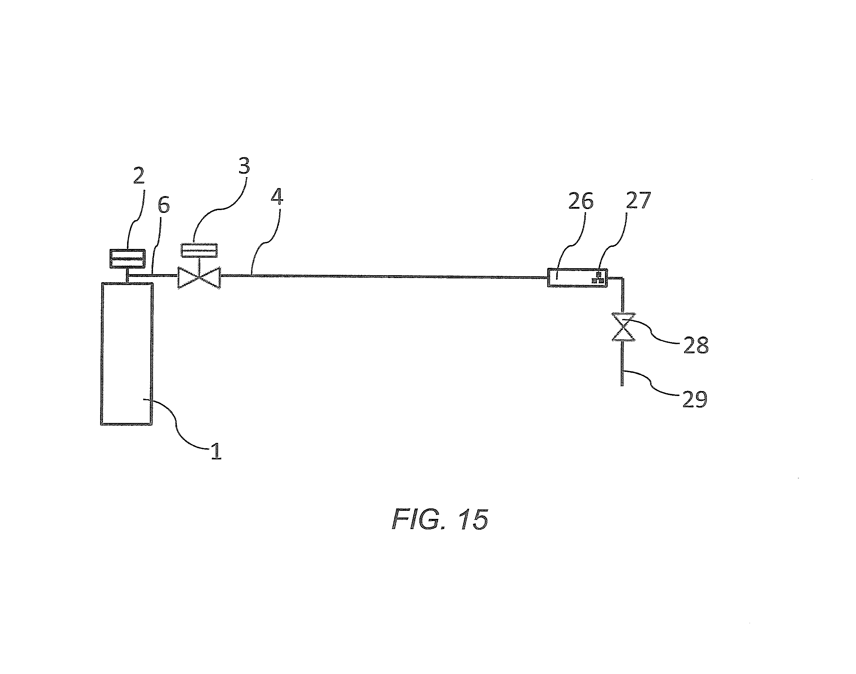

FIG. 15 illustrates a schematic diagram of this comparative example. In this comparative example, a manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1/2 inches, a wall thickness of 1 mm, and a length of 200 mm. Downstream of the supply valve 3, a 50 cc stainless steel cylinder 26 is connected via a stainless steel supply tube 4 made to the same dimensional standard as the duct 6.

Downstream of the cylinder 26, a vacuum line 29 is connected via a manual valve 28. In the bottom of the downstream end in the cylinder 26, 3 mm square PCTFE chips 27 are enclosed.

The on-off valve 2 and the supply valve 3 are all-metal automatic diaphragm valves. The manual valve 28 and the vacuum line 29 are for exchanging the gas inside the duct 6 and the supply tube 4.

Next, operations are described. In the state where the on-off valve 2 is closed and the other valves are open, the duct 6 and the supply tube 4 are evacuated into vacuum with the vacuum line 29. Thereafter, all the valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. After five minutes, the on-off valve 2 is closed and the gas in the duct 6 and the supply tube 4 is exchanged with the vacuum line 29.

After 10 repeats of the foregoing operations, the PCTFE chips 27 in the cylinder were taken out for visual inspection and weight loss rate measurement. As a result, change in color caused by burning was visually observed for approximately 50% of the PCTFE surfaces and the weight loss rate was 12 mass%. Since visual change and weight loss happened, it can be determined that the PCTFE was burnt.

[Comparative Example 2-2]

In this comparative example, the container 1 is filled with 100 vol% $NF_3$ gas at a pressure of 14.7 MPaG. Except for this, the configuration is the same as that of Comparative Example 2-1. The same operations as those in Comparative Example 2-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 2-3]

In this comparative example, the container 1 is filled with 100 vol% $O_2$ gas at a pressure of 14.7 MPaG. Except for this, the configuration is the same as that of Comparative Example 2-1. The same operations as those in Comparative Example 2-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 2-4]

In this comparative example, the container 1 is filled with 20 vol% $BF_3$ gas diluted with $N_2$ at a pressure of 14.7 MPaG. Except for this, the configuration is the same as that of Comparative Example 2-1. The same operations as those in Comparative Example 2-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 2-5]

In this comparative example, the container 1 is filled with 20 vol% ClF gas diluted with $N_2$ at a pressure of 14.7 MPaG. Except for this, the configuration is the same as that of Comparative Example 2-1. The same operations as those in Comparative Example 2-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 2-6]

In this comparative example, the container 1 is filled with 0.1 vol% $ClF_3$ gas diluted with $N_2$ at a pressure of 5 MPaG. Except for this, the configuration is the same as that of Comparative Example 2-1. The same operations as those in Comparative Example 2-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 2-7]

In this comparative example, the container 1 is filled with 0.1 vol% $IF_7$ gas diluted with $N_2$ at a pressure of 5 MPaG. Except for this, the configuration is the same as that of Comparative Example 2-1. The same operations as those in Comparative Example 2-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.
In the above-described second embodiment, a flow direction change mechanism 5 for changing the direction of halogen-containing gas flow is installed inside a part of the supply tube 4 downstream of the supply valve 3, so that increase in temperature inside the introduction valve 100, surface corrosion of the introduction valve 100, and deterioration of seal used in the introduction valve 100 can be inhibited.
The foregoing second embodiment has described an apparatus for supplying a halogen-containing gas from a container filled with the halogen-containing gas at high pressure to an external apparatus. However, as described in Example 2-17 and Comparative Example 2-4, the same effects can be obtained in the case of using a supporting gas such as $O_2$ or NO instead of the halogen-containing gas. In other words, this invention is viable under the same configuration except that the applied gas is replaced from a halogen-containing gas into a supporting gas.
Specifically, this invention is viable even if configured as a supporting gas supply apparatus for supplying a supporting gas from a container filled with the supporting gas at a high pressure to an external apparatus, including a supply tube connecting the container and the external apparatus, a supply valve attached to the supply tube to supply the supporting gas from the container, and a flow direction change mechanism installed in at least a part of the supply tube downstream of the supply valve to change a direction of a flow of the supporting gas.
For the flow direction change mechanism, a baffle having an opening may be installed to partially block the flow of the halogen-containing gas, and an area of the opening in the baffle may be 1/2 or less of a cross-sectional area of the supply tube.
A plurality of the baffles may be disposed in a longitudinal direction of the supply tube, and the plurality of the baffles may be disposed in such a manner that the openings of adjacent baffles do not overlap with each other in the longitudinal direction of the supply tube.
Alternatively, for the flow direction change mechanism, a plurality of fillers may be packed in the supply tube.
Preferably, the filling pressure for the supporting gas is 5 MPa or more and 20 MPa or less.
In this configuration employing a supporting gas, the flow direction change mechanism is likewise installed inside a part of the supply tube 4 downstream of the supply valve to change the direction of supporting gas flow, so that increase in temperature inside the introduction valve, surface corrosion of the introduction valve, and deterioration of seal used in the introduction valve can be inhibited.

<THIRD EMBODIMENT>

Next, a halogen-containing gas supply apparatus in a third embodiment of this invention is described. The following description mainly explains differences from the above-described first embodiment; the components same as those in the first embodiment are denoted by the same reference signs and explanations thereof are omitted.
The halogen-containing gas supply apparatus in the third embodiment is featured by a narrow part for limiting the cross-sectional area of gas flow to 0.5 $cm^2$ or less, which is provided in at least a part of the supply tube downstream of the supply valve to function as a shock wave prevention mechanism in the first embodiment. Still downstream of the narrow part, an introduction valve is installed to introduce the halogen-containing gas to the external apparatus.
Hereinafter, the halogen-containing gas supply apparatus in the third embodiment is described in detail.
The structure of the narrow part of the supply tube is not particularly limited as long as it can define the cross-sectional area of gas flow; for example, it may be a valve or an orifice plate that can narrow the cross-sectional area of gas flow compared with the other part. The narrow part may be configured with a straight tube. That is to say, the supply valve and the introduction valve are connected by the tube having a uniform diameter. It is preferable that the cross-sectional area of gas flow in the narrow part be 0.5 cm$^2$ or less. For the narrowest cross-sectional area of gas flow in the narrow part, it is sufficient if the gas can pass through; specifically, 0.0001 cm$^2$ or more is preferable. Considering the time taken to charge the section down to the connection part of the supply tube and the external apparatus with the halogen-containing gas, 0.001 cm$^2$ or more is particularly preferable.

In addition, a bypass tube bypassing the narrow part may be connected to the supply tube with a bypass valve attached to the bypass tube. In this configuration, after the section down to the connection part of the supply tube and the external apparatus is first charged with halogen-containing gas, the bypass valve is opened for the halogen-containing gas to flow in the bypass tube. Consequently, the volume of supplied halogen-containing gas flow can be increased. It is preferable that the cross-sectional area of gas flow in the bypass tube be more than 0.5 cm$^2$.

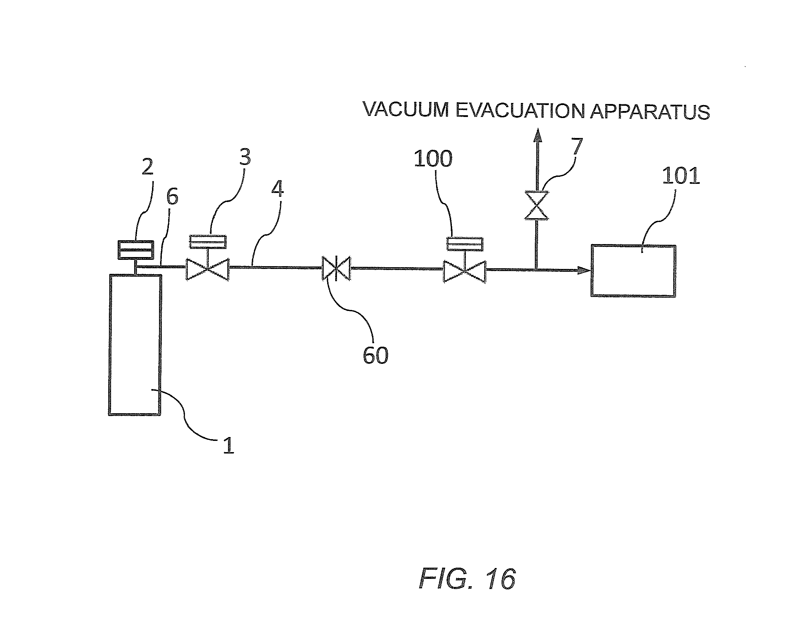

Explanation is provided with reference to FIG. 16. The basic configuration of the halogen-containing gas supply apparatus in the third embodiment is the same as that in the first embodiment shown in FIG. 1.

Between the supply valve 3 and the introduction valve 100 in the supply tube 4, a narrow part 60 defining a cross-sectional area of gas flow narrower than the other part is provided for a shock wave prevention mechanism. For example, the narrow part 60 may be an orifice plate with an opening having a cross-sectional area of 0.001 cm$^2$ or more and 0.5 cm$^2$ or less. The on-off valve 2 and the supply valve 3 are diaphragm valves in which gas contact parts are all metal.

In FIG. 16, in the state where the supply valve 3 is open and the on-off valve 2 and the introduction valve 100 are closed, the duct 6 and the supply tube 4 between the on-off valve 2 and the introduction valve 100 are evacuated into vacuum with the vacuum evacuation apparatus. Next, the supply valve 3 is closed and the on-off valve 2 is opened to charge the duct 6 between the container 1 and the supply valve 3 with halogen-containing gas. Then, the supply valve 3 is opened to raise the pressure inside the supply tube 4 between the supply valve 3 and the introduction valve 100 until the internal pressure becomes stable. Through these operations, the halogen-containing gas is ready to be supplied to the external apparatus 101. If a bypass tube bypassing the narrow part 60 is connected to the supply tube 4 and a bypass valve is attached to the bypass tube, the halogen-containing gas is ready to be supplied to the external apparatus 101 by opening the bypass valve after the pressure inside the supply tube 4 between the supply valve 3 and the introduction valve 100 is increased and the internal pressure becomes stable.

When supplying a high-pressure halogen-containing gas by opening the supply valve 3, the introduction valve 100 for introducing the halogen-containing gas to the external apparatus 101 easily suffers from elevation of its internal temperature, surface corrosion inside the chest of the introduction valve 100, and deterioration of a seal used in the introduction valve. This is presumed because the opening of the supply valve 3 causes generation of a shock wave in the supply tube 4 for conveying the halogen-containing gas and the generated shock wave grows in the process of propagation to reach the introduction valve 100, so that the temperature inside the introduction valve 100 increases. Therefore, the third embodiment provides a narrow part 60 defining a cross-sectional area of gas flow narrower than the other part in the supply tube 4 between the supply valve 3 and the introduction valve 100 to inhibit generation or the growth of a shock wave. This approach inhibits increase in temperature inside the introduction valve 100, surface corrosion inside the chest of the introduction valve 100, and deterioration of the seal in the introduction valve 100.

The supply tube 4 may have a plurality of narrow parts 60. For example, the plurality of narrow parts 60 may be disposed in series or in parallel.

It is desirable to use a metallic material for the on-off valve 2 of the container 1, the supply valve 3, the supply tube 4, the bypass tube, the bypass valve, and the introduction valve 100 in the parts to contact with halogen-containing gas. The metallic material may be stainless steel, Inconel, or Hastelloy.

The valve structures of the on-off valve 2 and the supply valve 3 are not particularly limited.

Hereinafter, examples of the third embodiment are described.

[Example 3-1]

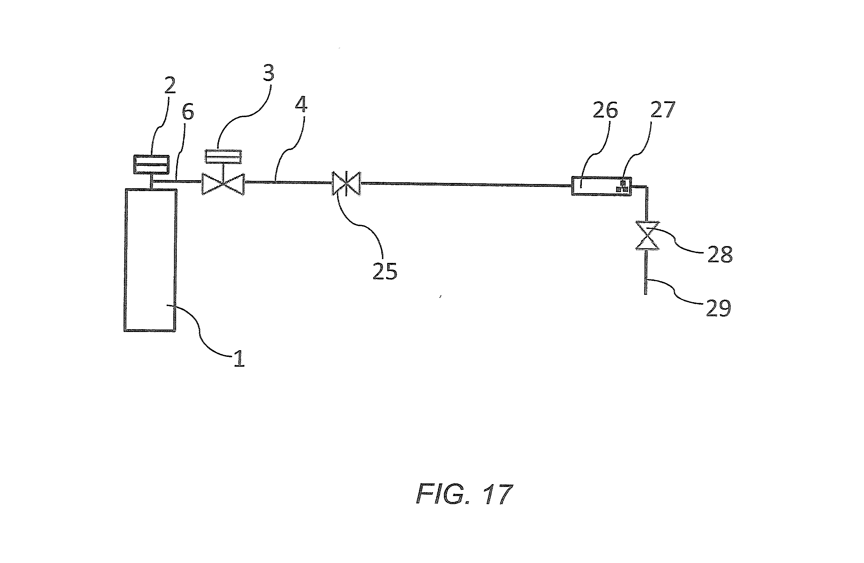

FIG. 17 illustrates a schematic diagram of this example. A manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1 / 2 inches, a wall thickness of 1 mm, and a length of 200 mm. Downstream of the supply valve 3, a stainless steel supply tube 4 made to the same dimensional standard as the duct 6 is connected. In the middle of the supply tube 4, a stainless steel orifice plate 25 is interposed. Downstream of the orifice plate 25, a 50 cc stainless steel cylinder 26 is connected. The cross-sectional area of gas flow through the orifice plate 25 is 0.1 cm$^2$.

Downstream of the cylinder 26, a vacuum line 29 is connected via a manual valve 28. In the bottom of the downstream end in the cylinder 26, 3 mm square PCTFE (polychlorotrifluoroethylene) chips 27 are enclosed.

The on-off valve 2 and the supply valve 3 are all-metal automatic diaphragm valves. The manual valve 28 and the vacuum line 29 are for exchanging the gas inside the duct 6 and the supply tube 4.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-2]

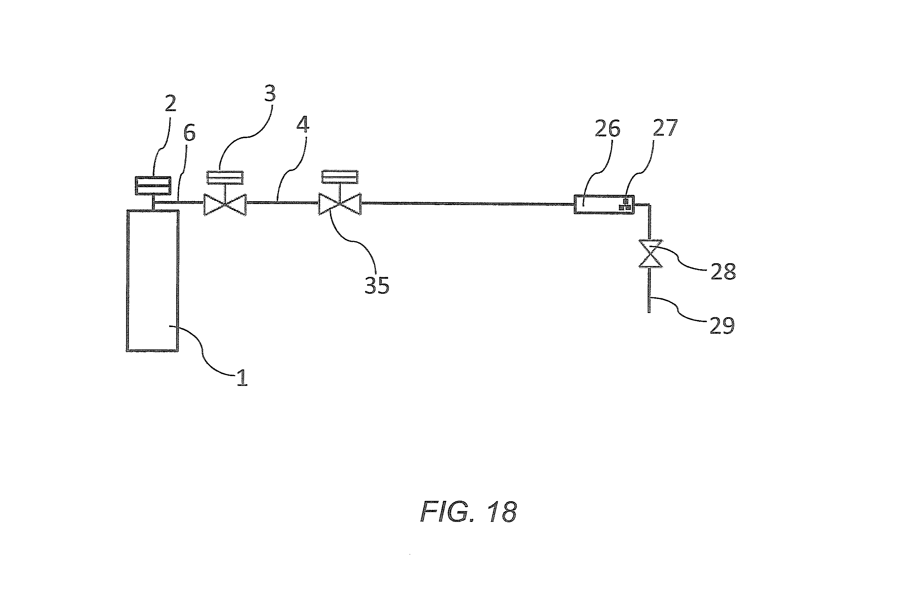

FIG. 18 illustrates a schematic diagram of this example. In this example, in place of the orifice plate 25, a valve 35 is installed in the middle of the supply tube 4. Except for this, the configuration is the same as that of Example 3-1. The valve 35 is an all-metal automatic diaphragm valve and the minimum cross-sectional area of gas flow in the valve is 0.1 cm$^2$ when the valve is open.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the valve 35 is opened and then the supply valve 3 is opened to change the pressure in the supply tube 4 between the container 1 and the cylinder 26 to 5 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-3]

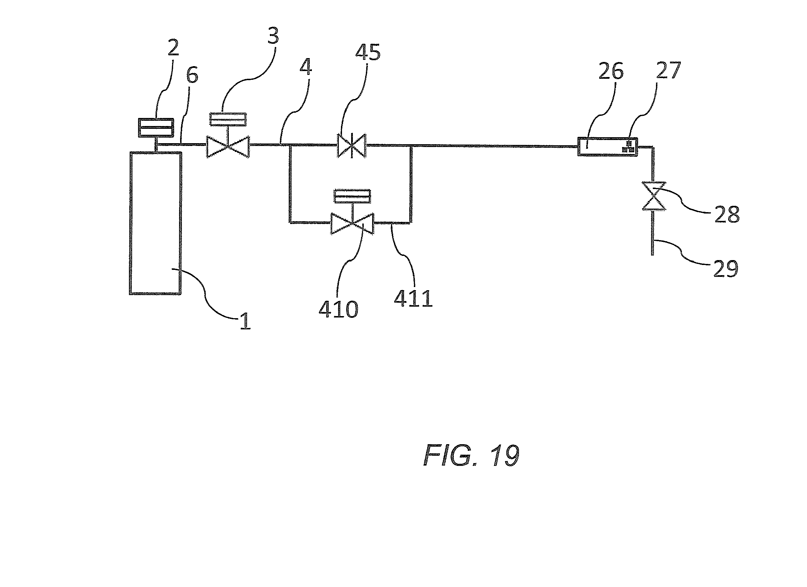

FIG. 19 illustrates a schematic diagram of this example. In this example, in the middle of the straight stainless steel supply tube 4 having an outer diameter of 1/2 inches and a wall thickness of 1 mm, a stainless steel orifice plate 45 is interposed. In addition, a stainless steel bypass tube 411 1 having an outer diameter of 1/2 inches and a wall thickness of 1 mm with a bypass valve 410 attached is connected to the supply tube 4 so as to bypass the orifice plate 45. Except for this, the configuration is the same as that of Example 3-1.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG, and then the bypass valve 410 is opened. Thereafter, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-4]

In this example, the container 1 is filled with 20 vol% $F_2$ gas diluted with $N_2$ at a pressure of 14.7 MPaG. Except for this, the configuration is the same as that of Example 3-1.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 14.7 MPaG in the duct 6 between the container 1 and the supply valve 3.

Furthermore, the supply valve 3 is opened to change the pressure in the supply tube 4 between the container 1 and the cylinder 26 to 14.7 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-5]

In this example, the cross-sectional area of gas flow through the orifice plate 25 is 0.0002 cm$^2$. Except for this, the configuration is the same as that of Example 3-1. The operations are the same as those in Example 3-1.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-6]

In this example, the cross-sectional area of gas flow through the orifice plate 25 is 0.001 cm$^2$. Except for this, the configuration is the same as that of Examples 3-1. The operations are the same as those in Example 3-1.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-7]

In this example, the cross-sectional area of gas flow through the orifice plate 25 is 0.49 cm$^2$. Except for this, the configuration is the same as that of Example 3-1. The operations are the same as those in Example 3-1.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-8]

In this example, the container 1 is filled with 10 vol% $Cl_2$ gas diluted with $N_2$ at a pressure of 5 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-9]

In this example, the container 1 is filled with 0.5 vol% Br2 gas diluted with $N_2$ at a pressure of 5 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-10]

In this example, the container 1 is filled with 0.1 vol% iodine gas diluted with $N_2$ at a pressure of 5 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-11]

In this example, the container 1 is filled with 10 vol% $F_2$ + $Cl_2$ mixed gas (the volume fractions of $F_2$ and $Cl_2$ are 50 vol%) diluted with $N_2$ at a pressure of 5 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-12]

In this example, the container 1 is filled with 20 vol% $F_2$ gas diluted with $N_2$ at a pressure of 3.6 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-13]

In this example, the container 1 is filled with 10 vol% $F_2$ gas diluted with $N_2$ at a pressure of 19 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-14]

In this example, the container 1 is filled with 10 vol% $F_2$ gas diluted with $N_2$ at a pressure of 21 MPaG. Except for this, the configuration is the same as that of Example 3-1. The same operations as those in Example 3-1 were performed.

After 10 repeats of the above-described operations, the PCTFE chips 27 in the cylinder were taken out for visual inspection and weight loss rate measurement. As a result, a little change in color was observed on the surfaces of the chips but the weight loss rate was 0.5 mass% or less. Since the weight did not change and visual change was slight, the degree of burn of the PCTFE had no problem.

[Example 3-15]

In this example, the container 1 is filled with 50 vol% $F_2$ gas diluted with $N_2$ at a pressure of 5 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-16]

In this example, the container 1 is filled with 100 vol% $NF_3$ gas at a pressure of 14.7 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-17]

In this example, the container 1 is filled with 100 vol% $O_2$ gas at a pressure of 14.7 MPaG. Except for this, the configuration is the same as that of Example 3-1. The same operations as those in Example 3-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-18]

In this example, the container 1 is filled with 20 vol% $BF_3$ gas diluted with $N_2$ at a pressure of 14.7 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-19]

In this example, the container 1 is filled with 20 vol% ClF gas diluted with $N_2$ at a pressure of 14.7 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-20]

In this example, the container 1 is filled with 0.1 vol% $ClF_3$ gas diluted with $N_2$ at a pressure of 5 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 3-21]

In this example, the container 1 is filled with 0.1 vol% $IF_7$ gas diluted with $N_2$ at a pressure of 5 MPaG. Except for this, the configuration is the same as that of Example 3-1. The same operations as those in Example 3-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Comparative Example 3-1]

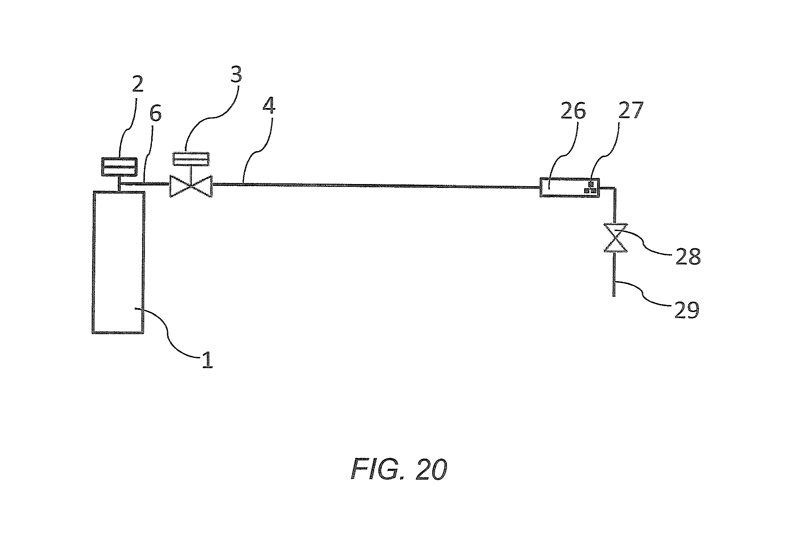

FIG. 20 illustrates a schematic diagram of this comparative example. In this comparative example, a manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1/2 inches, a wall thickness of 1 mm, and a length of 200 mm. Downstream of the supply valve 3, a 50 cc stainless steel cylinder 26 is connected via a stainless steel supply tube 4 made to the same dimensional standard as the duct 6.
Downstream of the cylinder 26, a vacuum line 29 is connected via a manual valve 28. In the bottom of the downstream end in the cylinder 26, 3 mm square PCTFE chips 27 are enclosed.
The on-off valve 2 and the supply valve 3 are all-metal automatic diaphragm valves. The manual valve 28 and the vacuum line 29 are for exchanging the gas inside the duct 6 and the supply tube 4.
Next, operations are described. In the state where the on-off valve 2 is closed and the other valves are open, the duct 6 and the supply tube 4 are evacuated into vacuum with the vacuum line 29. Thereafter, all the valves are closed, and then the on-off valve 2 is opened to change the pressure to 5 MPaG in the duct 6 between the container 1 and the supply valve 3.
Furthermore, the supply valve 3 is opened to change the pressure in the supply tube 4 between the container 1 and the cylinder 26 to 5 MPaG. After five minutes, the on-off valve 2 is closed and the gas in the duct 6 and the supply tube 4 is exchanged with the vacuum line 29.
After 10 repeats of the foregoing operations, the PCTFE chips 27 in the cylinder were taken out for visual inspection and weight loss rate measurement. As a result, change in color caused by burning was visually observed for approximately 50% of the PCTFE surfaces and the weight loss rate was 12 mass%. Since visual change and weight loss happened, it can be determined that the PCTFE was burnt.

[Comparative Example 3-2]

In this comparative example, the cross-sectional area of gas flow through the orifice plate 25 is 0.6 cm$^2$. Except for this, the configuration is the same as that of Example 3-1. The operations are the same as those in Example 3-1.
After 10 repeats of the operations, the PCTFE chips 27 in the cylinder 26 were taken out for visual inspection and weight loss rate measurement. As a result, change in color caused by burning was visually observed for approximately 30% of the PCTFE surfaces and the weight loss rate was 7 mass%. Since visual change and weight loss happened, it can be determined that the PCTFE was burnt.

[Comparative Example 3-3]

In this comparative example, the container 1 is filled with 100 vol% $NF_3$ gas at a pressure of 14.7 MPaG. Except for this, the configuration is the same as that of Comparative Example 3-1. The same operations as those in Comparative Example 3-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-4]

In this comparative example, the container 1 is filled with 100 vol% $O_2$ gas at a pressure of 14.7 MPaG. Except for this, the configuration is the same as that of Comparative Example 3-1. The same operations as those in Comparative Example 3-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-5]

In this comparative example, the container 1 is filled with 20 vol% $BF_3$ gas diluted with $N_2$ at a pressure of 14.7 MPaG. Except for this, the configuration is the same as that of Comparative Example 3-1. The same operations as those in Comparative Example 3-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-6]

In this comparative example, the container 1 is filled with 20 vol% CIF gas diluted with $N_2$ at a pressure of 14.7 MPaG. Except for this, the configuration is the same as that of Comparative Example 3-1. The same operations as those in Comparative Example 3-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-7]

In this comparative example, the container 1 is filled with 0.1 vol% $CIF_3$ gas diluted with $N_2$ at a pressure of 5 MPaG. Except for this, the configuration is the same as that of Comparative Example 3-1. The same operations as those in Comparative Example 3-1 were performed.
After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-8]

In this comparative example, the container 1 is filled with 0.1 vol% $IF_7$ gas diluted with $N_2$ at a pressure of 5 MPaG. Except for this, the configuration is the same as that of Comparative Example 3-1. The same operations as those in Comparative Example 3-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 3-9]

In this comparative example, the cross-sectional area of gas flow through the orifice plate 25 is 0.6 cm$^2$. Except for this, the configuration is the same as that of Example 3-17. The operations are the same as those in Example 3-17.

After 10 repeats of the operations, the PCTFE chips 27 in the cylinder 26 were taken out for visual inspection and weight loss rate measurement. As a result, change in color caused by burning was observed on the surfaces of the chips, although the change was slight, and the weight loss rate was 0.6 mass%.

In the above-described third embodiment, a narrow part 60 is provided in the supply tube 4 to limit a cross-sectional area of gas flow to 0.5 cm$^2$ or less, so that increase in temperature inside the introduction valve 100, surface corrosion of the introduction valve 100, and deterioration of seal used in the introduction valve 100 can be inhibited.

The foregoing third embodiment has described an apparatus for supplying a halogen-containing gas from a container filled with the halogen-containing gas at high pressure to the external apparatus. However, as described in Example 3-17 and Comparative Examples 3-4 and 3-9, the same effects can be obtained in the case of using a supporting gas such as $O_2$ or NO instead of the halogen-containing gas. In other words, this invention is viable under the same configuration except that the applied gas is replaced from a halogen-containing gas into a supporting gas.

Specifically, this invention is viable even if configured as a supporting gas supply apparatus for supplying a supporting gas from a container filled with the supporting gas at a high pressure to an external apparatus, including a supply tube connecting the container and the external apparatus, a supply valve attached to the supply tube to supply the supporting gas from the container, and a narrow part provided in at least a part of the supply tube downstream of the supply valve to limit a cross-sectional area of the flow of the supporting gas to 0.5 cm$^2$ or less.

This invention is viable even if configured as an apparatus for supplying a supporting gas further including a bypass tube connected to the supply tube in such a manner that the bypass tube bypasses the narrow part and a bypass valve attached to the bypass tube, in addition to the above-described configuration.

Preferably, the filling pressure for the supporting gas is 5 MPa or more and 20 MPa or less.

As the narrow part, an orifice plate or a valve may be used.

In this configuration employing a supporting gas, a narrow part is likewise provided in the supply tube to limit a cross-sectional area of gas flow to 0.5 cm$^2$ or less, so that increase in temperature inside the introduction valve, surface corrosion of the introduction valve, and deterioration of seal used in the introduction valve can be inhibited.

<FOURTH EMBODIMENT>

Next, a halogen-containing gas supply apparatus in a fourth embodiment of this invention is explained. The following description mainly explains differences from the above-described first embodiment; the components same as those in the first embodiment are denoted by the same reference signs and explanations thereof are omitted.

The halogen-containing gas supply apparatus in the fourth embodiment is featured by a bent part having a curvature radius of 10 cm or less, which is provided in at least a part of the supply tube downstream of the supply valve to function as a shock wave prevention mechanism in the first embodiment. Still downstream of the bent part, an introduction valve is installed to introduce the halogen-containing gas to the external apparatus.

Hereinafter, the halogen-containing gas supply apparatus in the third embodiment is described in detail.

The structure of the bent part of the supply tube is not particularly limited as long as it can eliminate the rectilinearity of the gas flow, like a coil. It is preferable that the curvature radius of the bent part be 10 cm or less, particularly 0.5 cm or more and 10 cm or less. In the case of the maximum curvature radius of less than 0.5 cm, the gas might flow mainly substantially straight through the space in the bent part. In the case of the minimum curvature radius of more than 10 cm, the effect to eliminate the rectilinearity of the gas flow might be small since the curve is close to a straight line.

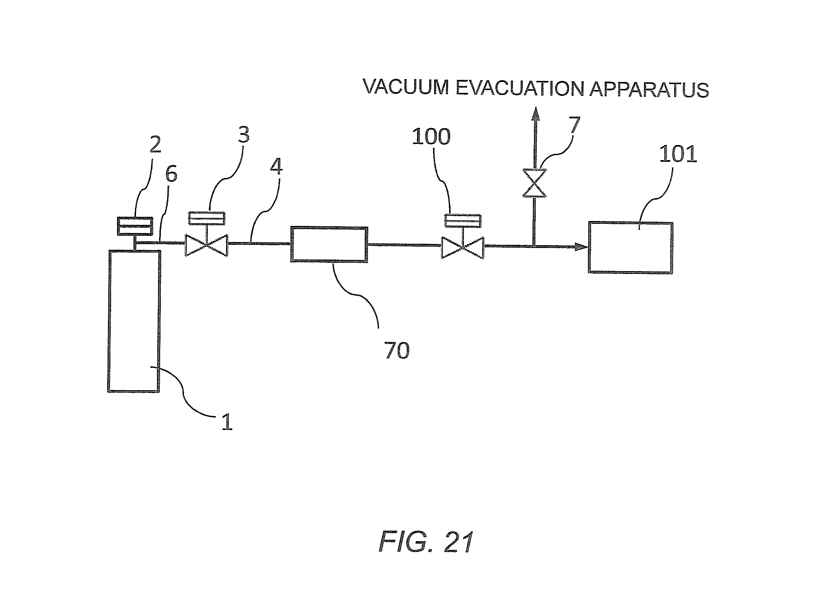

Explanation is provided with reference to FIG. 21. The basic configuration of the halogen-containing gas supply apparatus in the third embodiment is the same as that in the first embodiment shown in FIG. 1.

Between the supply valve 3 and the introduction valve 100 in the supply tube 4, a rectilinearity inhibition mechanism 70 including a bent part is installed for a shock wave prevention mechanism. For example, the rectilinearity inhibition mechanism 70 may be a coil having a curvature radius of 5 cm for the gas flow channel. The on-off valve 2 and the supply valve 3 are diaphragm valves in which gas contact parts are all metal.

In FIG. 21, in the state where the supply valve 3 is open and the on-off valve 2 and the introduction valve 100 are closed, the duct 6 and the supply tube 4 between the on-off valve 2 and the introduction valve 100 are evacuated into vacuum with the vacuum evacuation apparatus. Next, the supply valve 3 is closed and the on-off valve 2 is opened to charge the duct 6 between the container 1 and the supply valve 3 with halogen-containing gas. Then, the supply valve 3 is opened to raise the pressure inside the supply tube 4 between the supply valve 3 and the introduction valve 100 until the internal pressure becomes stable. Through these operations, the halogen-containing gas is ready to be supplied to the external apparatus 101.

When supplying a high-pressure halogen-containing gas by opening the supply valve 3, the introduction valve 100 for introducing the halogen-containing gas to the external apparatus 101 easily suffers from elevation of its internal temperature, surface corrosion inside the chest of the introduction valve 100, and deterioration of a seal used in the introduction valve. This is presumed because the opening of the supply valve 3 causes generation of a shock wave in the supply tube 4 for conveying the halogen-containing gas and the generated shock wave grows in the process of propagation to reach the introduction valve 100, so that the temperature inside the introduction valve 100 increases. Therefore, the fourth embodiment provides a bent part in the supply tube 4 between the supply valve 3 and the introduction valve 100 to inhibit generation or the growth of a shock wave. This approach inhibits increase in temperature inside the introduction valve 100, surface corrosion inside the chest of the introduction valve 100, and deterioration of the seal in the introduction valve 100.

The supply tube 4 may have a plurality of bent parts. For example, the plurality of bent parts may be disposed in series or in parallel.

It is desirable to use a metallic material for the on-off valve 2 of the container 1, the supply valve 3, the supply tube 4, and the introduction valve 100 in the parts to contact with halogen-containing gas. The metallic material may be stainless steel, Inconel, or Hastelloy.

The valve structures of the on-off valve 2 and the supply valve 3 are not particularly limited.

Hereinafter, examples of the fourth embodiment are described.

[Example 4-1]

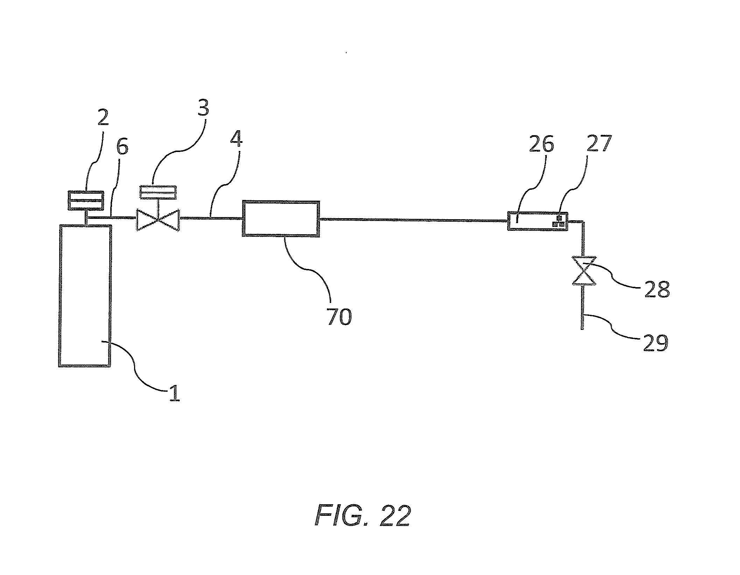

FIG. 22 illustrates a schematic diagram of this example. A manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1 / 2 inches, a wall thickness of 1 mm, and a length of 200 mm. Downstream of the supply valve 3, a stainless steel supply tube 4 made to the same dimensional standard as the duct 6 is connected. In the middle of the supply tube 4, a rectilinearity inhibition mechanism 70 is installed. Downstream of the rectilinearity inhibition mechanism 70, a 50 cc stainless steel cylinder 26 is connected. Downstream of the cylinder 26, a vacuum line 29 is connected via a manual valve 28.

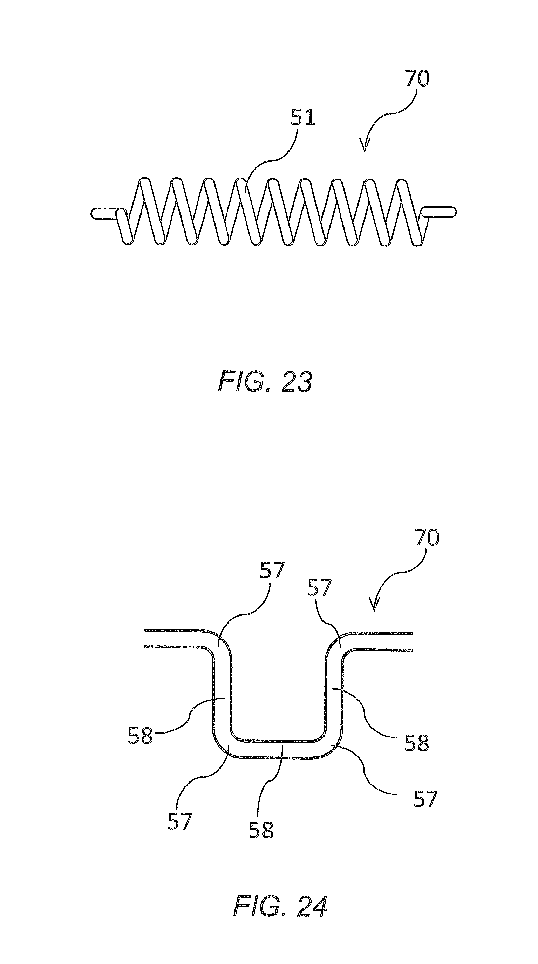

The rectilinearity inhibition mechanism 70 is, as shown in FIG. 23, a stainless steel tube 51 having an outer diameter of 3/8 inches and a wall thickness of 1 mm and including a coil-shaped bent part having 10 turns and a curvature radius of 5 cm. It is connected in the middle of the supply tube 4.

In the bottom of the downstream end in the cylinder 26, 3 mm square PCTFE (polychlorotrifluoroethylene) chips 27 are enclosed.

The on-off valve 2 and the supply valve 3 are all-metal automatic diaphragm valves. The manual valve 28 and the vacuum line 29 are for exchanging the gas inside the duct 6 and the supply tube 4.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-2]

In this example, the rectilinearity inhibition mechanism 70 is structured as shown in FIG. 24, in which four bent parts 57 having a curvature radius of 1 cm are connected in series with straight parts 58 each having a length of 5 cm so that the parts having the curvature radius and the straight parts are alternately continued to form a gas flow channel. The configuration except for the rectilinearity inhibition mechanism 70 is the same as that of Example 4-1.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-3]

In this example, the container 1 is filled with 20 vol% $F_2$ gas diluted with $N_2$ at a pressure of 14.7 MPaG. Except for this, the configuration of this example is the same as that of Example 4-1.

Next, operations are described. In the state where the on-off valve 2 is closed and the other valves are open, the duct 6 and the supply tube 4 are evacuated into vacuum with the vacuum line 29. Thereafter, all valves are closed, and then the on-off valve 2 is opened to change the pressure to 14.7 MPaG in the duct 6 between the container 1 and the supply valve 3.

Furthermore, the supply valve 3 is opened to change the pressure in the duct between the container 1 and the cylinder 26 to 14.7 MPaG. Then, the on-off valve 2 is closed and the gas in the duct 6 and the supply tube 4 is exchanged with the vacuum line 29.

After 10 repeats of the foregoing operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-4]

In this example, as the supply tube 4, a stainless steel tube having an outer diameter of 1/8 inches and a wall thickness of 0.72 mm is used and, as the tube 51, a stainless steel tube having an outer diameter of 1/8 inches and a wall thickness of 0.72 mm and including a bent part shaped like a coil having 10 turns and a curvature radius of 0.5 cm is used. Except for these, the configuration of this example is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-5]

In this example, the curvature radius of the tube 51 is 9 cm. Except for this, the configuration is the same as that of Example 4-1. The operations are the same as those in Example 4-1.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-6]

In this example, the curvature radius of the tube 51 is 10 cm. Except for this, the configuration is the same as that of Example 4-1. The operations are the same as those in Example 4-1.

After 10 repeats of the above-described operations, the PCTFE chips 27 in the cylinder were taken out for visual inspection and weight loss rate measurement. As a result, a little change in color was observed on the surfaces of the chips but the weight loss rate was 0.5 mass% or less. Since the weight did not change and visual change was slight, the degree of burn of the PCTFE had no problem.

[Example 4-7]

In this example, the container 1 is filled with 10 vol% $Cl_2$ gas diluted with $N_2$ at a pressure of 5 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-8]

In this example, the container 1 is filled with 0.5 vol% $Br_2$ gas diluted with $N_2$ at a pressure of 5 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-9]

In this example, the container 1 is filled with 0.1 vol% iodine gas diluted with $N_2$ at a pressure of 5 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-10]

In this example, the container 1 is filled with 10 vol% $F_2$ + $Cl_2$ mixed gas (the volume fractions of $F_2$ and $Cl_2$ are 50 vol%) diluted with $N_2$ at a pressure of 5 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-11]

In this example, the container 1 is filled with 20 vol% $F_2$ gas diluted with $N_2$ at a pressure of 3.6 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-12]

In this example, the container 1 is filled with 10 vol% $F_2$ gas diluted with $N_2$ at a pressure of 19 MPaG. Except for this, the configuration is the same as that of Example 4-1. The same operations as those in Example 4-1 were performed.
After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-13]

In this example, the container 1 is filled with 10 vol% $F_2$ gas diluted with $N_2$ at a pressure of 21 MPaG. Except for this, the configuration is the same as that of Example 4-1. The same operations as those in Example 4-1 were performed.

After 10 repeats of the above-described operations, the PCTFE chips 27 in the cylinder were taken out for visual inspection and weight loss rate measurement. As a result, a little change in color was observed on the surfaces of the chips but the weight loss rate was 0.5 mass% or less. Since the weight did not change and visual change was slight, the degree of burn of the PCTFE had no problem.

[Example 4-14]

In this example, the container 1 is filled with 50 vol% $F_2$ gas diluted with $N_2$ at a pressure of 5 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-15]

In this example, the container 1 is filled with 100 vol% $NF_3$ gas at a pressure of 14.7 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-16]

In this example, the container 1 is filled with 100 vol% $O_2$ gas at a pressure of 14.7 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-17]

In this example, the container 1 is filled with 20 vol% $BF_3$ gas diluted with $N_2$ at a pressure of 14.7 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-18]

In this example, the container 1 is filled with 20 vol% CIF gas diluted with $N_2$ at a pressure of 14.7 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-19]

In this example, the container 1 is filled with 0.1 vol% $CIF_3$ gas diluted with $N_2$ at a pressure of 5 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Example 4-20]

In this example, the container 1 is filled with 0.1 vol% $IF_7$ gas diluted with $N_2$ at a pressure of 5 MPaG. Except for this, the configuration is the same as that of Example 4-1. The same operations as those in Example 4-1 were performed.

After 10 repeats of the operations, the PCTFE chips 27 in the cylinder 26 were taken out for visual inspection and weight loss rate measurement. As a result, no visual change was observed and the weight loss rate was 0.5 mass% or less. Because of no visual change or weight loss, it can be determined that the PCTFE was not burnt.

[Comparative Example 4-1]

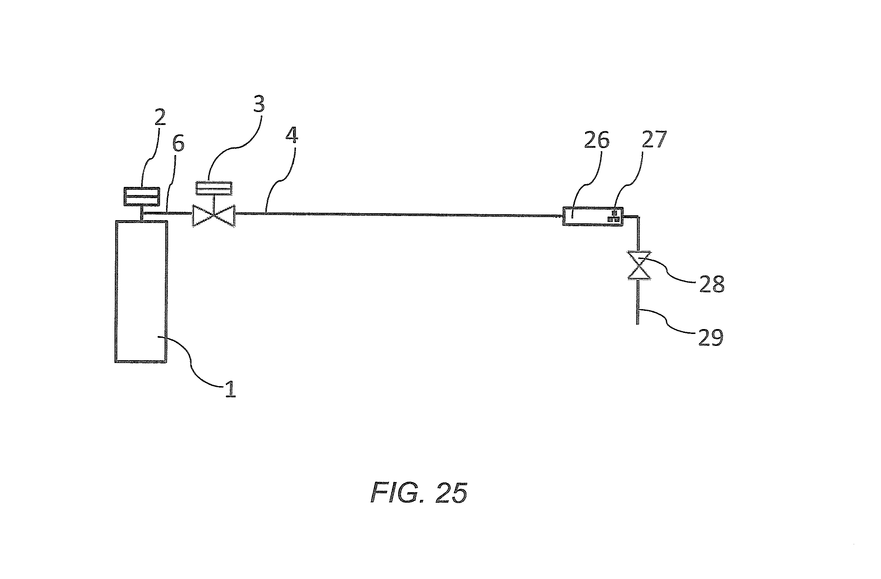

FIG. 25 illustrates a schematic diagram of this comparative example. In this comparative example, a manganese steel container 1 is filled with 20 vol% $F_2$ gas diluted with $N_2$ at a pressure of 5 MPaG. The container 1 has an on-off valve 2. The on-off valve 2 and a supply valve 3 are connected by a straight stainless steel duct 6 having an outer diameter of 1/2 inches, a wall thickness of 1 mm, and a length of 200 mm. Downstream of the supply valve 3, a 50 cc stainless steel cylinder 26 is connected via a stainless steel supply tube 4 made to the same dimensional standard as the duct 6.

Downstream of the cylinder 26, a vacuum line 29 is connected via a manual valve 28. In the bottom of the downstream end in the cylinder 26, 3 mm square PCTFE chips 27 are enclosed.

The on-off valve 2 and the supply valve 3 are all-metal automatic diaphragm valves. The manual valve 28 and the vacuum line 29 are for exchanging the gas inside the duct 6 and the supply tube 4.

Next, operations are described. In the state where the on-off valve 2 is closed and the other valves are open, the duct 6 and the supply tube 4 are evacuated into vacuum with the vacuum line 29. Thereafter, all the valves are closed, and then the on-off valve 2 is opened to change the pressure to 5 MPaG in the duct 6 between the container 1 and the supply valve 3.

Furthermore, the supply valve 3 is opened to change the pressure in the supply tube 4 between the container 1 and the cylinder 26 to 5 MPaG. After five minutes, the on-off valve 2 is closed and the gas in the duct 6 and the supply tube 4 is exchanged with the vacuum line 29.

After 10 repeats of the foregoing operations, the PCTFE chips 27 in the cylinder were taken out for visual inspection and weight loss rate measurement. As a result, change in color caused by burning was visually observed for approximately 50% of the PCTFE surfaces and the weight loss rate was 12 mass%. Since visual change and weight loss happened, it can be determined that the PCTFE was burnt.

[Comparative Example 4-2]

In this comparative example, the curvature radius of the tube 51 is 12 cm. Except for this, the configuration is the same as that of Example 4-1. The operations are the same as those in Example 4-1.

After 10 repeats of the operations, the PCTFE chips 27 in the cylinder 26 were taken out for visual inspection and weight loss rate measurement. As a result, change in color caused by burning was visually observed for approximately 10% of the PCTFE surfaces and the weight loss rate was 4 mass%. Since visual change and weight loss happened, it can be determined that the PCTFE was burnt.

[Comparative Example 4-3]

In this comparative example, the curvature radius of the tube 51 is 15 cm. Except for this, the configuration is the same as that of Example 4-1. The operations are the same as those in Example 4-1.

After 10 repeats of the operations, the PCTFE chips 27 in the cylinder 26 were taken out for visual inspection and weight loss rate measurement. As a result, change in color caused by burning was visually observed for approximately 30% of the PCTFE surfaces and the weight loss rate was 7 mass%. Since visual change and weight loss happened, it can be determined that the PCTFE was burnt.

[Comparative Example 4-4]

In this comparative example, the container 1 is filled with 100 vol% $NF_3$ gas at a pressure of 14.7 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 4-5]

In this comparative example, the container 1 is filled with 100 vol% $O_2$ gas at a pressure of 14.7 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 4-6]

In this comparative example, the container 1 is filled with 20 vol% $BF_3$ gas diluted with $N_2$ at a pressure of 14.7 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 4-7]

In this comparative example, the container 1 is filled with 20 vol% ClF gas diluted with $N_2$ at a pressure of 14.7 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 4-8]

In this comparative example, the container 1 is filled with 0.1 vol% $ClF_3$ gas diluted with $N_2$ at a pressure of 5 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

[Comparative Example 4-9]

In this comparative example, the container 1 is filled with 0.1 vol% $IF_7$ gas diluted with $N_2$ at a pressure of 5 MPaG. Except for this, the configuration is the same as that of Comparative Example 4-1. The same operations as those in Comparative Example 4-1 were performed.

After 10 repeats of the operations, the PCTFE chips 27 in the cylinder 26 were taken out for visual inspection and weight loss rate measurement. As a result, the weight loss rate was 0.5 mass% or less; however, change in color caused by burning was observed on the surfaces of the chips, although the change was slight.

In the above-described fourth embodiment, a bent part is provided in at least a part of the supply tube 4 downstream of the supply valve 3, so that increase in temperature inside the introduction valve 100, surface corrosion of the introduction valve 100, and deterioration of seal used in the introduction valve 100 can be inhibited.

The foregoing fourth embodiment has described an apparatus for supplying a halogen-containing gas from the container filled with the halogen-containing gas at high pressure to the external apparatus. However, as described in Example 4-16 and Comparative Example 4-5, the same effects can be obtained in the case of using a supporting gas such as $O_2$ or NO instead of the halogen-containing gas. In other words, this invention is viable under the same configuration except that the applied gas is replaced from a halogen-containing gas into a supporting gas.

Specifically, this invention is viable even if configured as a supporting gas supply apparatus for supplying a supporting gas from a container filled with the supporting gas at a high pressure to an external apparatus, including a supply tube connecting the container and the external apparatus, a supply valve attached to the supply tube to supply the supporting gas from the container, and a bent part having a curvature radius of 10 cm or less provided in at least a part of the supply tube downstream of the supply valve.

It is preferable that the filling pressure for the supporting gas be 5 MPa or more and 20 MPa or less.

The bent part may be coil-shaped.

In this configuration employing a supporting gas, a bent part is likewise provided in at least a downstream part of the supply tube, so that increase in temperature inside the introduction valve, surface corrosion of the introduction valve, and deterioration of seal used in the introduction valve can be inhibited.

It is obvious that this invention is not limited to the above-described embodiments, but can be modified in various ways within the scope of the technical idea thereof.

With respect to the foregoing explanation, the contents of Japanese Patent Application No. 2011-32991 filed on February 18, 2011, Japanese Patent Application No. 2011-33005 filed on February 18, 2011, Japanese Patent Application No. 2011-32998 filed on February 18, 2011, and Japanese Patent Application No. 2011-33001 filed on February 18, 2011 are incorporated herein by reference.

The halogen-containing gas supply apparatus and the method of supplying halogen-containing gas of this invention are utilized to safely supply halogen-containing gas for cleaning gas or etching gas to a semiconductor manufacturing apparatus.

## Claims

1. A halogen-containing gas supply apparatus for supplying a halogen-containing gas from a container filled with the halogen-containing gas at a high pressure to an external apparatus, the halogen-containing gas supply apparatus comprising:

   a supply tube connecting the container and the external apparatus;
   a supply valve attached to the supply tube to supply the halogen-containing gas from the container; and
   a shock wave prevention mechanism installed downstream of the supply valve to prevent generation of a shock wave.

2. The halogen-containing gas supply apparatus according to claim 1,
   wherein the shock wave prevention mechanism includes a flow direction change mechanism installed in a part of the supply tube downstream of the supply valve to change a direction of a flow of the halogen-containing gas.

3. The halogen-containing gas supply apparatus according to claim 2,
   wherein the flow direction change mechanism includes a baffle having an opening installed inside the supply tube to partially block the flow of the halogen-containing gas, and
   wherein an area of the opening in the baffle is 1/2 or less than a cross-sectional area of the supply tube.

4. The halogen-containing gas supply apparatus according to claim 3,
   wherein a plurality of the baffles are disposed in a longitudinal direction of the supply tube, and
   wherein the plurality of the baffles are disposed in such a manner that the openings of adjacent baffles do not overlap with each other in the longitudinal direction of the supply tube.

5. The halogen-containing gas supply apparatus according to claim 2,
   wherein the flow direction change mechanism includes a plurality of fillers packed in the supply tube.

6. The halogen-containing gas supply apparatus according to claim 1,
   wherein the shock wave prevention mechanism includes a narrow part provided in at least a part of the supply tube downstream of the supply valve to limit a cross-sectional area of the flow of the halogen-containing gas to $0.5 \text{ cm}^2$ or less.

7. The halogen-containing gas supply apparatus according to claim 6, further comprising:

   a bypass tube connected to the supply tube in such a manner that the bypass tube bypasses the narrow part; and
   a bypass valve attached to the bypass tube.

8. The halogen-containing gas supply apparatus according to claim 6,
   wherein an orifice plate is used for the narrow part.

9. The halogen-containing gas supply apparatus according to claim 6,
   wherein a valve is used for the narrow part.

10. The halogen-containing gas supply apparatus according to claim 1,
    wherein the shock wave prevention mechanism includes a bent part having a curvature radius of 10 cm or less
    provided in at least a part of the supply tube downstream of the supply valve.

11. The halogen-containing gas supply apparatus according to claim 10, wherein the bent part is coil-shaped.

12. The halogen-containing gas supply apparatus according to any one of claims 1, 2, 6, and 10,
    wherein a halogen in the halogen-containing gas is selected from a group consisting of fluorine, chlorine, bromine,
    and iodine.

13. The halogen-containing gas supply apparatus according to any one of claims 1, 2, 6, and 10,
    wherein a filling pressure for the halogen-containing gas is between 5 MPa and 20 MPa.

14. A halogen-containing gas supply method of supplying a halogen-containing gas from a container filled with the
    halogen-containing gas at a high pressure to an external apparatus, the method comprising opening a supply valve
    to direct the high pressure halogen-containing gas in the container to the external apparatus via a shock wave
    prevention mechanism for preventing generation of a shock wave.

VACUUM EVACUATION APPARATUS

*FIG. 1*

EP 2 626 615 A1

50

51

FIG. 2

50

53

52

FIG. 3A

50

54

52

53

FIG. 3B

50

10

52

FIG. 4

EP 2 626 615 A1

VACUUM EVACUATION APPARATUS

FIG. 5

EP 2 626 615 A1

VACUUM EVACUATION APPARATUS

FIG. 6

FIG. 7

*FIG. 8*

FIG. 9

FIG. 10

FIG. 11

FIG. 12

*FIG. 13*

*FIG. 14*

EP 2 626 615 A1

FIG. 15

45

VACUUM EVACUATION APPARATUS

FIG. 16

EP 2 626 615 A1

FIG. 17

*FIG. 18*

*FIG. 19*

EP 2 626 615 A1

EP 2 626 615 A1

FIG. 20

50

*FIG. 21*

EP 2 626 615 A1

FIG. 22

FIG. 23

FIG. 24

FIG. 25

## INTERNATIONAL SEARCH REPORT

| | International application No. |
|---|---|
| | PCT/JP2011/070336 |

| A. CLASSIFICATION OF SUBJECT MATTER |
|---|
| *F17C7/00*(2006.01)i, *F17C13/00*(2006.01)i |

According to International Patent Classification (IPC) or to both national classification and IPC

| B. FIELDS SEARCHED |
|---|
| Minimum documentation searched (classification system followed by classification symbols) |
| F17C7/00, F17C13/00 |

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| A | JP 2003-528278 A (Advanced Technology Materials, Inc.), 24 September 2003 (24.09.2003), entire text; all drawings & US 6257000 B1 & EP 1287286 A & WO 2001/071242 A1 & AU 4767001 A | 1-14 |
| A | JP 9-126397 A (Messer Griesheim GmbH), 13 May 1997 (13.05.1997), entire text; all drawings & EP 762105 A1 & DE 19531505 A | 1-14 |

| ☒ Further documents are listed in the continuation of Box C. | ☐ See patent family annex. |

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| 09 November, 2011 (09.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/070336

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2009-542988 A (Praxair Technology, Inc.), 03 December 2009 (03.12.2009), entire text; all drawings & US 2008/0000532 A1　　& EP 2035741 A & WO 2008/016441 A2　　& DE 602007005132 D & KR 10-2009-0031377 A　& CN 101479520 A | 1-14 |
| A | JP 61-027389 A (Draegerwerk AG.), 06 February 1986 (06.02.1986), entire text; all drawings & US 4611628 A　　　　& GB 2161250 A & DE 3424503 A　　　　& SE 8503307 A | 1-14 |
| A | US 3061039 A (Meiville F. PETERS), 30 October 1962 (30.10.1962), entire text; all drawings (Family: none) | 1-14 |
| A | FR 2680709 A1 (BARSACQ GABRIEL), 05 March 1993 (05.03.1993), entire text; all drawings & EP 609235 A　　　　　& WO 1993/003868 A1 & CA 2116136 A | 1-14 |
| A | DE 10059077 A1 (Kamleithner-Maly UTA), 20 September 2001 (20.09.2001), entire text; all drawings & AT 408676 B | 1-14 |
| A | DE 10015051 A1 (ZF LENKSYSTEME GMBH), 27 September 2001 (27.09.2001), entire text; all drawings (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005207480 A
- JP 2005188672 A
- JP 2000291500 A
- JP H0562704 A
- JP 2011032991 A
- JP 2011033005 A
- JP 2011032998 A
- JP 2011033001 A